# EUROPÄISCHE PATENTSCHRIFT

(11) **EP 1 908 811 B1**
(45) Veröffentlichungstag und Bekanntmachung des Hinweises auf die Patenterteilung: **29.08.2012**
(21) Anmeldenummer: 07017451.1
(22) Anmeldetag: 06.09.2007
(51) Int. Cl.: C09K 19/20, C09K 19/42

(54) **Flüssigkristallines Medium**
Liquid crystalline medium
Milieu cristallin liquide

(30) Priorität: 04.10.2006 DE 102006046907; 09.02.2007 DE 102007007143
(43) Veröffentlichungstag der Anmeldung: 09.04.2008
(73) Patentinhaber: Merck Patent GmbH, 64293 Darmstadt (DE)
(72) Erfinder: Wittek, Michael, Dr., 64285 Darmstadt (DE); Montenegro, Elivira, Dr., 69469 München (DE); Schneider, Konstantin, 65520 Bad Camberg (DE); Schuler, Brigitte, 63762 Grossostheim (DE)

(56) Entgegenhaltungen:
- EP-A- 1 454 975
- EP-A1- 1 862 526
- WO-A-03/033619
- WO-A-2005/123879
- DE-A1-102007 009 944

## Beschreibung

Die vorliegende Erfindung betrifft ein flüssigkristallines Medium (FK-Medium), dessen Verwendung für elektrooptische Zwecke und dieses Medium enthaltende FK-Anzeigen.

Flüssigkristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnem verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung.

Mit den aus dem Stand der Technik zur Verfügung stehenden Medien, z.B. beschrieben in der EP-1 454 975 A2, DE 10 2007 009944 A1, WO 2005/123879 A1, WO 03/033619 A1 und EP 1 862 526 A1 (Stand der Technik nach Artikel 54(3) EPÜ), ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Insbesondere bei FK-Anzeigen für TV- und Video-Anwendungen (z.B. LCD-TV, Monitore, PDA_{S}, Notebooks, Spielkonsolen) ist eine deutliche Verringerung der Schaltzeiten gewünscht. Dies erfordert FK-Mischungen mit niedrigen Rotationsviskositäten. Gleichzeitig sollten die FK-Medien hohe Klärpunkte aufweisen.

Der Erfindung liegt die Aufgabe zugrunde, Medien insbesondere für derartige MFK-, IPS-, TN- oder STN-Anzeigen bereitzustellen, die die oben angegebenen Nachteile nicht oder nur in geringerem Maße zeigen, und vorzugsweise schnelle Schaltzeiten und niedrige Rotationsviskositäten bei gleichzeitig hohem Klärpunkt, sowie eine hohe dielektrische Anisotropie und eine niedrige Schwellenspannung aufweisen.

Es wurde nun gefunden, dass diese Aufgabe gelöst werden kann, wenn man FK-Medien enthaltend eine oder mehrere Verbindungen der Formel I und eine oder mehrere Verbindungen der Formel XIII und eine oder mehrere Verbindungen der Formel III verwendet. Die Verbindungen der Formel I, der Formel III und der Formel XIII führen zu Mischungen mit den oben angegebenen gewünschten Eigenschaften.

Gegenstand der Erfindung ist ein flüssigkristallines Medium, dadurch gekennzeichnet, dass es eine oder mehrere Verbindungen der Formel I, 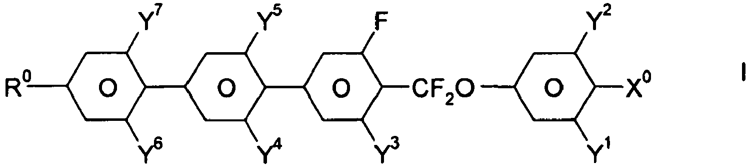 worin
- R⁰: einen halogenierten oder unsubstituierten Alkyl-oder Alkoxyrest mit 1 bis 15 C-Atomen, wobei in diesen Resten auch eine oder mehrere CH₂-Gruppen jeweils unabhängig voneinander durch -C≡C-, -CF_{2O}-, -CH=CH-,-O-, -CO-O- oder -O-CO- so ersetzt 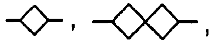
- X⁰: F, CI, CN, SF₅, SCN, NCS, halogenierter Alkylrest, halogenierter Alkenylrest, halogenierter Alkoxyrest oder halogenierter Alkenyloxyrest mit bis zu 6 C-Atomen, und
- Y¹⁻⁷: jeweils unabhängig voneinander H oder F
bedeuten,
und
eine oder mehrere Verbindungen der Formel XIII, 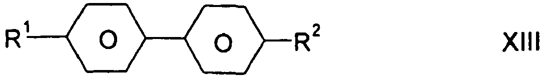 worin
R¹ und R² jeweils unabhängig voneinander n-Alkyl, Alkoxy, Oxaalkyl, Fluoralkyl oder Alkenyl mit jeweils bis zu 9 C-Atomen bedeuten, wobei mindestens einer der Reste R¹ und R² Alkenyl mit 2 bis 7 C-Atomen bedeutet,
und
eine oder mehrere Verbindungen der Formel III, 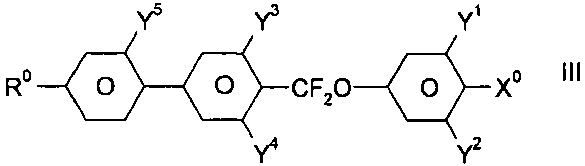 worin R⁰, X⁰ und Y¹⁻⁵ die oben angegebene Bedeutung besitzen,
enthält.

Gegenstand der Erfindung ist weiterhin die Verwendung von FK-Medien wie vor- und nachstehend beschrieben für elektrooptische Zwecke, insbesondere in FK-Anzeigen, insbesondere in TN-, TFT-, IPS- oder OCB-Anzeigen.

Gegenstand der Erfindung ist weiterhin ein elektrooptische FK-Anzeige, insbesondere eine TN-, TFT-, IPS- oder OCB-Anzeige, enthaltend ein FK-Medium wie vor- und nachstehend beschrieben.

Überraschenderweise wurde gefunden, dass die Verbindungen der Formel I ein vorteilhaftes Verhältnis Rotationsviskosität (γ)/Klärpunkt aufweisen. Sie sind daher zur Realisierung von Flüssigkristallmischungen mit niedrigem γ und hohem Klärpunkt besonders geeignet. Darüber hinaus zeigen die Verbindungen der Formel I eine gute Löslichkeit in FK-Medien. Erfindungsgemäße FK-Medien enthaltend Verbindungen der Formel I besitzen eine niedrige Rotationsviskosität, schnelle Schaltzeiten, einen relativ hohen Klärpunkt, eine hohe positive dielektrische Anisotropie, eine hohe Doppelbrechung und einen breiten nematischen Phasenbereich. Sie sind deshalb besonders gut für TV- und Video-Anwendungen geeignet.

Die Verbindungen der Formel I, der Formel XIII und der Formel III besitzen einen breiten Anwendungsbereich. In Abhängigkeit von der Auswahl der Substituenten können sie als Basismaterialien dienen, aus denen flüssigkristalline Medien zum überwiegenden Teil zusammengesetzt sind; es können aber auch den Verbindungen der Formel I flüssigkristalline Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I, der Formel XIII und der Formel III sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Die Verbindungen der Formel I, der Formel XIII und der Formel III werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7-oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-,5-,6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R⁰ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, Cl oder ein- oder mehrfach fluoriertes Alkyl oder Alkoxy mit 1, 2 oder 3 C-Atomen oder ein- oder mehrfach fluoriertes Alkenyl mit 2 oder 3 C-Atomen bedeutet. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃, OCH=CF₂ oder CH=CF₂, ganz besonders bevorzugt F oder OCF₃, ferner OCHF₂ und OCH=CF₂.

Besonders bevorzugt sind Verbindungen der Formel I, worin X⁰ F oder OCF₃, vorzugsweise F, bedeutet. Weitere bevorzugte Verbindungen der Formel I sind solche, worin Y¹ F bedeutet, solche worin Y² F bedeutet, solche worin Y³ H bedeutet, solche worin Y⁴ H und Y⁵ F bedeutet, sowie solche, worin Y⁶ und Y⁷ H bedeuten.
Besonders bevorzugte Verbindungen der Formel I sind ausgewählt aus folgenden Unterformeln 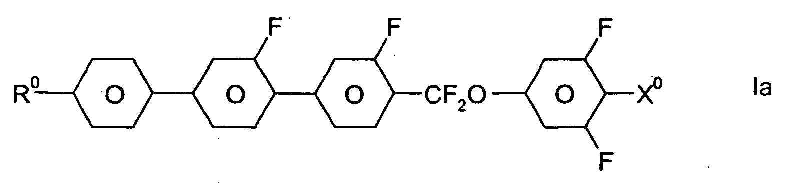 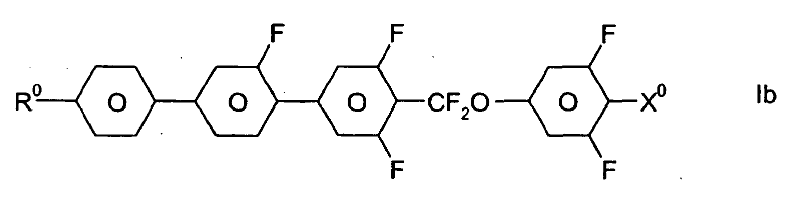 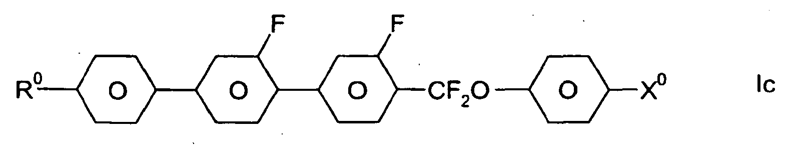 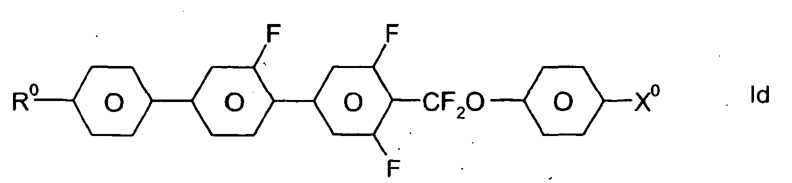 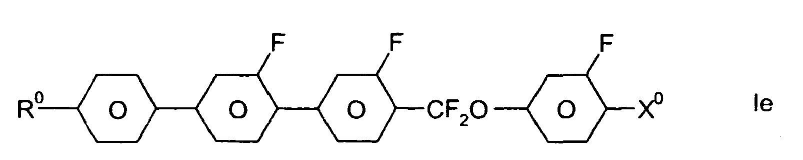 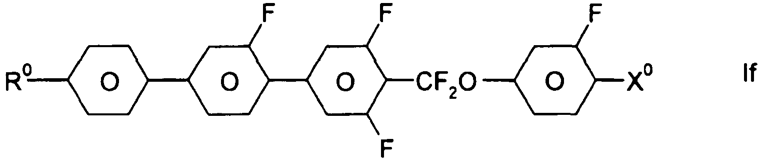 worin R⁰ und X⁰ die in Formel I angegebene Bedeutung haben. Vorzugsweise bedeutet R⁰ geradkettiges Alkyl mit 1 bis 8 C-Atomen, ferner Alkenyl mit 2 bis 7 C-Atomen.

Weitere bevorzugte Ausführungsformen sind im Folgenden angegeben:
- Das Medium enthält zusätzlich eine oder mehrere Verbindungen der Formel II: 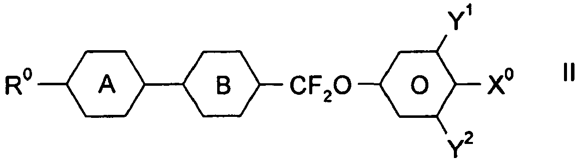 worin R⁰, X⁰ und Y¹⁻² die in Formel I angegebene Bedeutung besitzen, und 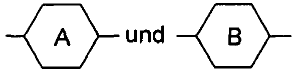 jeweils unabhängig voneinander 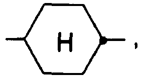 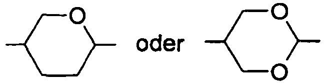 bedeuten;
- Die Verbindungen der Formel II sind vorzugsweise ausgewählt aus folgenden Formeln: 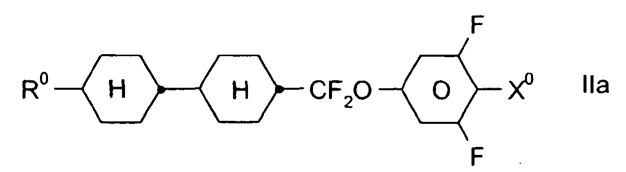 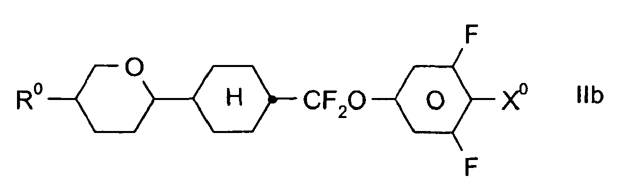 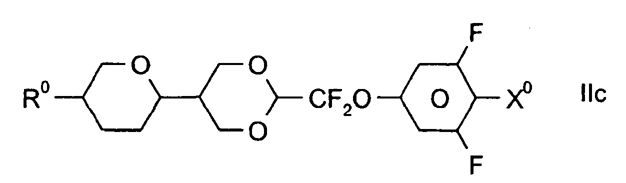 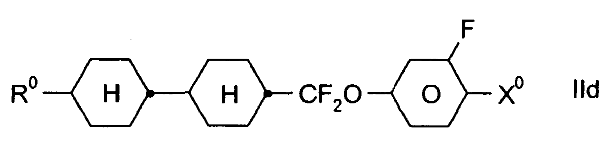 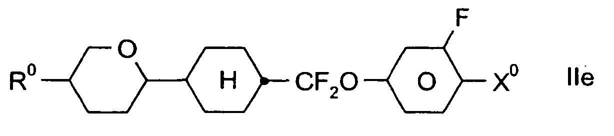 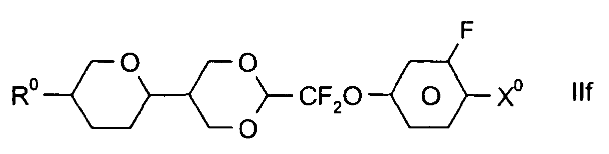 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F. Besonders bevorzugt sind Verbindungen der Formel IIa und IIb;
- Die Verbindungen der Formel III sind vorzugsweise ausgewählt aus folgenden Formeln: 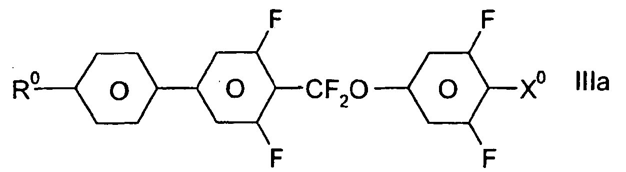 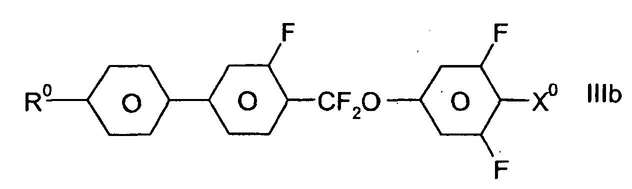 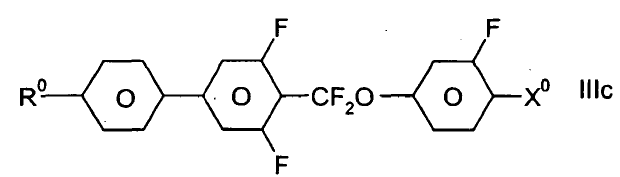 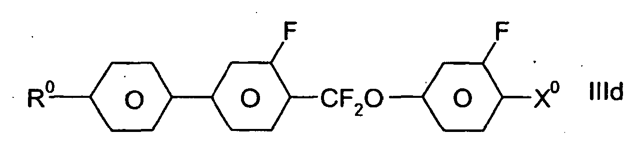 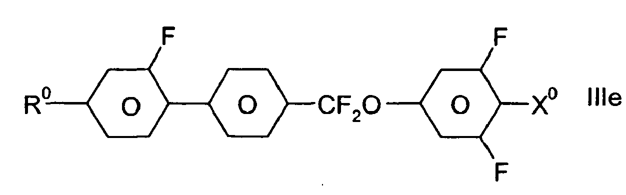 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F. Besonders bevorzugt sind Verbindungen der Formeln IIIa und IIIe;
- Das Medium enthält zusätzlich eine oder mehrere Verbindungen ausgewählt aus folgenden Formeln: 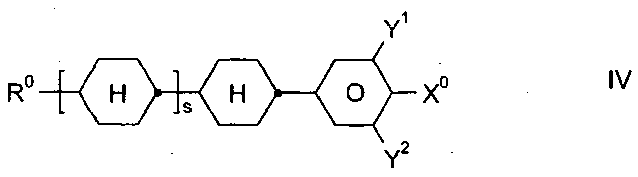 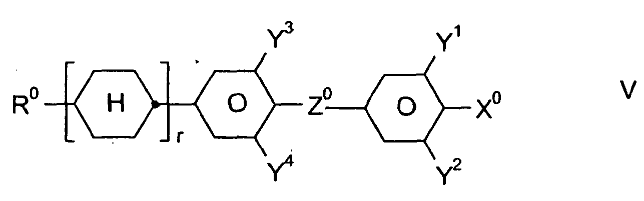 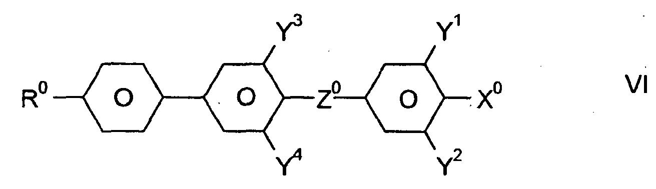 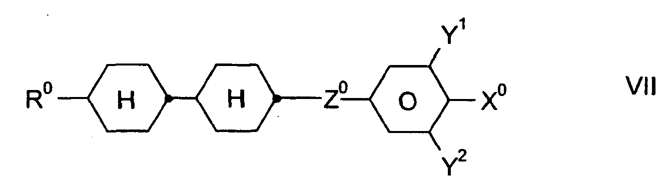 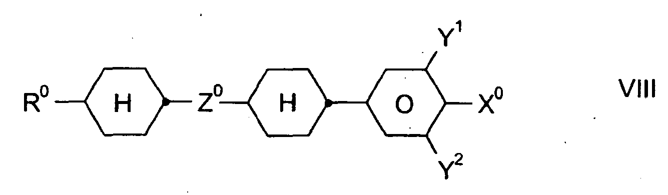 worin R⁰, X⁰ und Y¹⁻⁴ die in Formel I angegebenen Bedeutungen besitzen,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in Formel V und VI auch eine Einfachbindung, in Formel V und VIII auch -CF₂O-, und
   - r: 0 oder 1 und
   - s: 0 oder 1
   bedeutet;
- Die Verbindungen der Formel IV sind vorzugsweise ausgewählt aus folgenden Formeln: 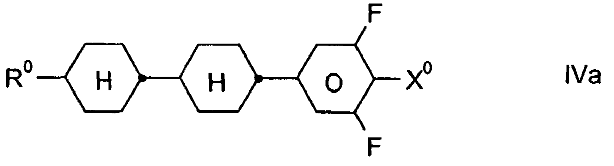 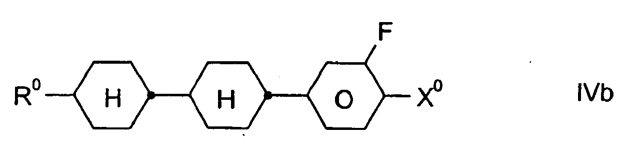 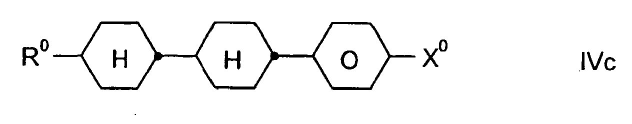 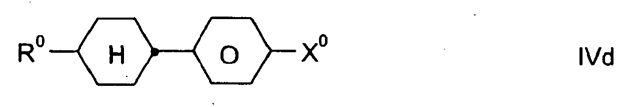 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F oder OCF₃, ferner Cl;
- Die Verbindungen der Formel V sind vorzugsweise ausgewählt aus folgenden Formeln: 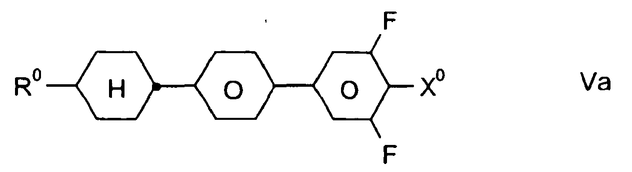 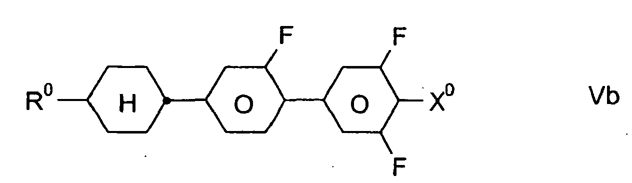 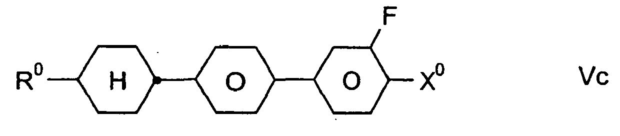 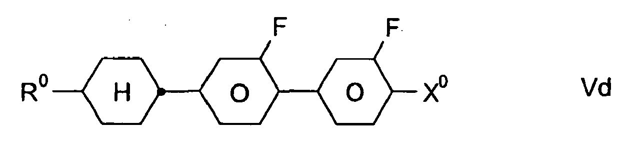 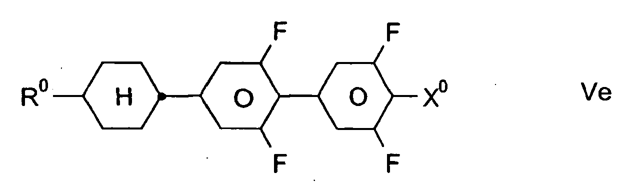 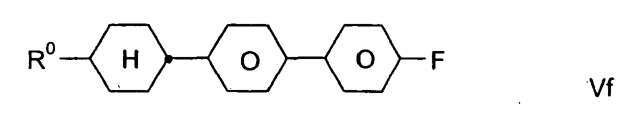 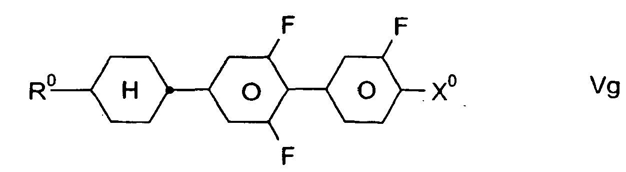 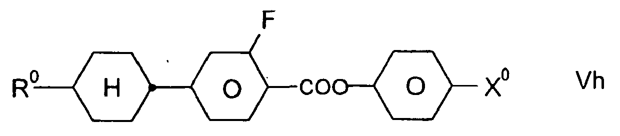 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F und OCF₃, ferner OCHF₂ und OCH=CF₂;
- Die Verbindungen der Formel VI sind vorzugsweise ausgewählt aus folgenden Formeln: 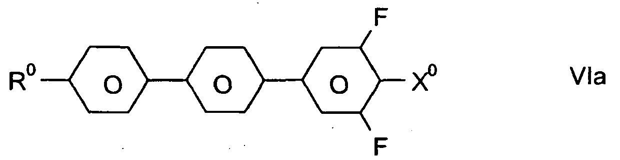 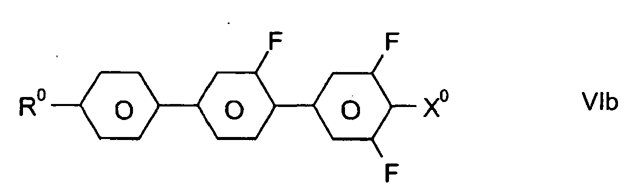 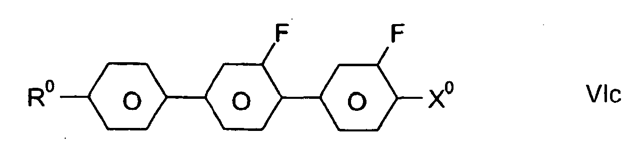 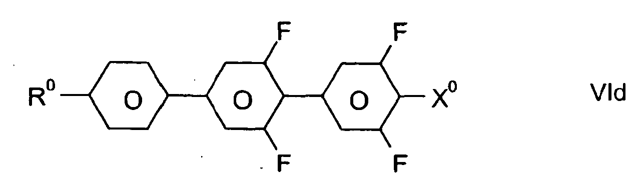 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F, ferner OCF₃, OCHF₂ und OCH=CF₂;
- Die Verbindungen der Formel VII sind vorzugsweise ausgewählt aus folgenden Formeln: 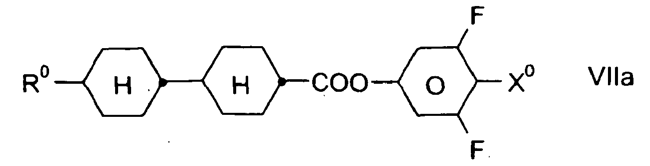 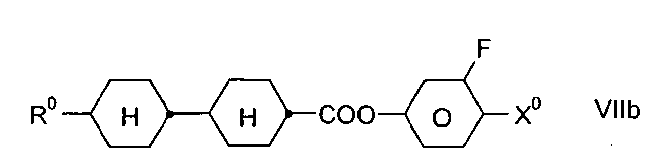 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F, ferner OCF₃, OCHF₂ und OCH=CF₂.
- Das Medium enthält zusätzlich eine oder mehrere Verbindungen ausgewählt aus den folgenden Formeln: 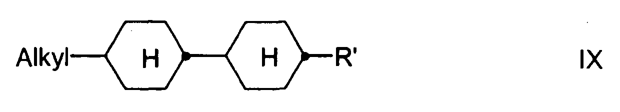 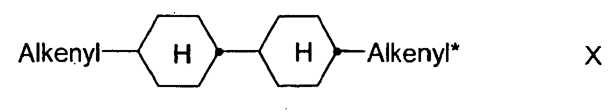 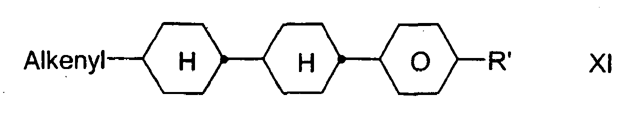 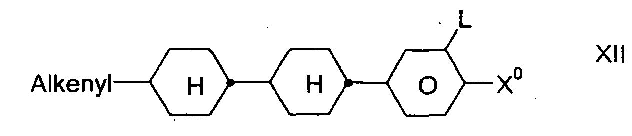 worin X⁰ die oben angegebene Bedeutung besitzt, und
   - L: H oder F,
   - "Alkyl": C₁₋₇-Alkyl,
   - R': C₁₋₇-Alkyl, C₁₋₆-Alkoxy oder C₂₋₇-Alkenyl, und
   - "Alkenyl" und "Alkenyl*": jeweils unabhängig voneinander C₂₋₇-Alkenyl bedeuten.
- Die Verbindungen der Formeln IX-XII sind vorzugsweise ausgewählt aus folgenden Formeln, 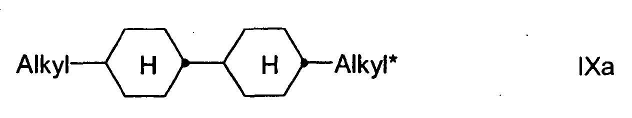 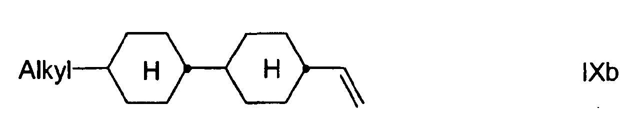 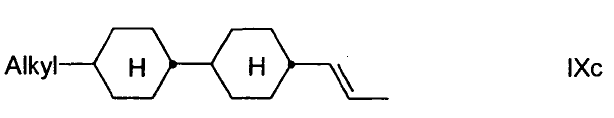 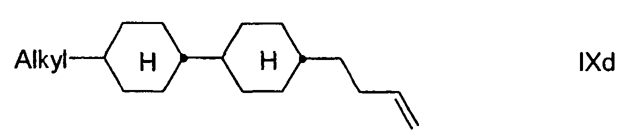 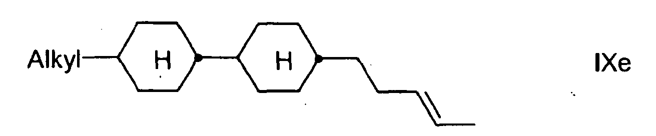 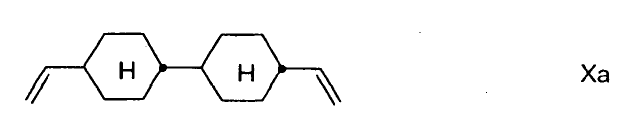 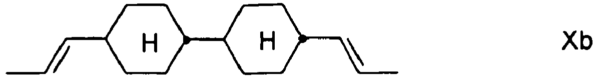 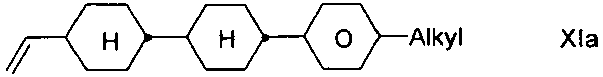 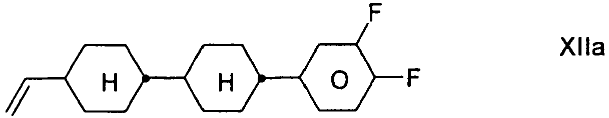 worin "Alkyl" und "Alkyl^{*}" jeweils unabhängig voneinander C₁₋₇-Alkyl bedeuten;
- Das Medium enthält zusätzlich eine oder mehrere Verbindungen ausgewählt aus der folgenden Formel, 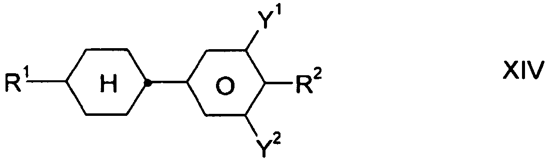 worin Y^{1,2} die oben angegebenen Bedeutungen haben, und R¹ und R² jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten;
- Das Medium enthält eine oder mehrere Verbindungen der Formel XIII, worin mindestens einer der Reste R¹ und R² Alkenyl mit 2 bis 7 C-Atomen bedeutet, vorzugsweise solche ausgewählt aus folgenden Formeln, 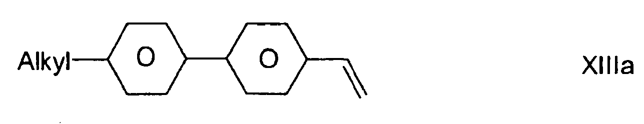 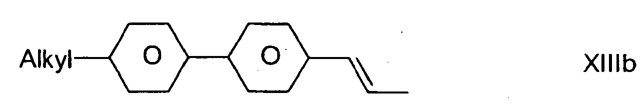 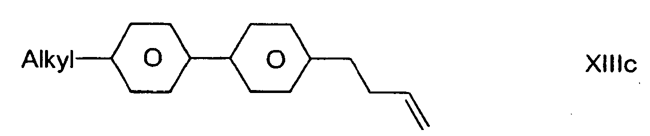 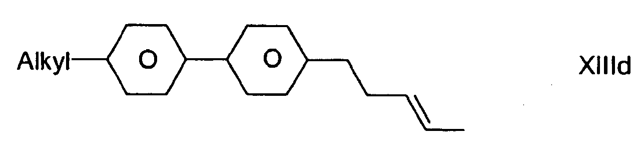 worin "Alkyl" die oben angegebene Bedeutung hat;
- Das Medium enthält eine oder mehrere Verbindungen der folgenden Formeln, 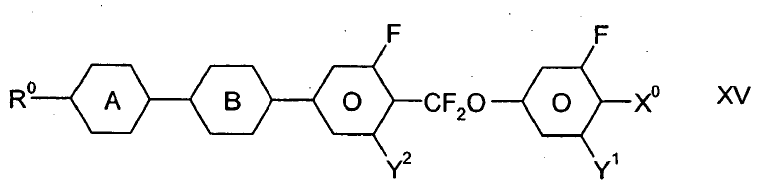 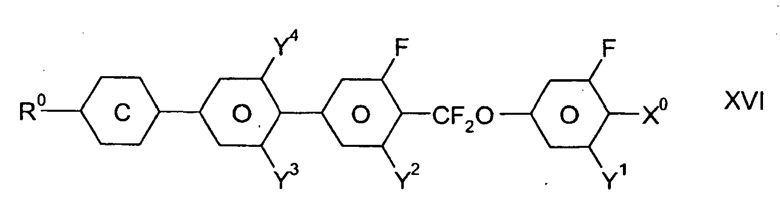 worin R⁰, X⁰ und Y¹⁻⁴ die in Formel I angegebene Bedeutung besitzen, und 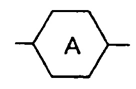 und 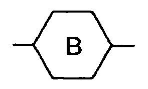 jeweils unabhängig voneinander 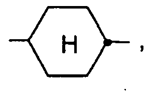 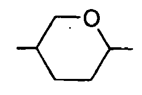 oder 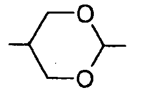 bedeuten, und 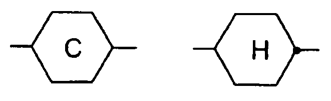 oder 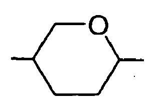 bedeutet;
- Die Verbindungen der Formeln XV und XVI sind vorzugsweise ausgewählt aus folgenden Formeln: 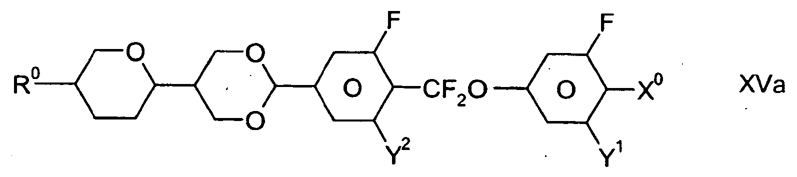 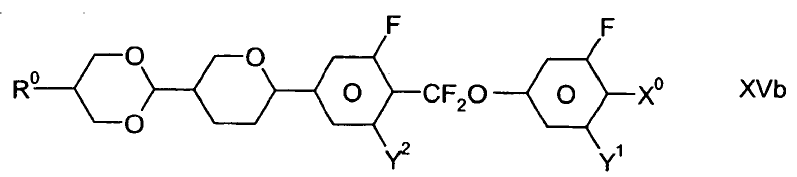 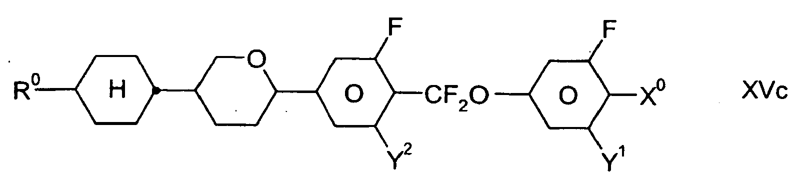 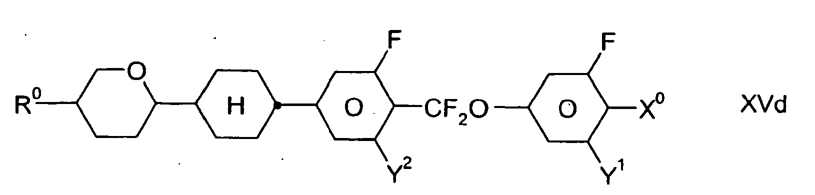 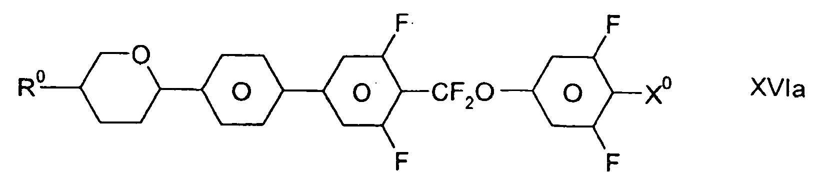 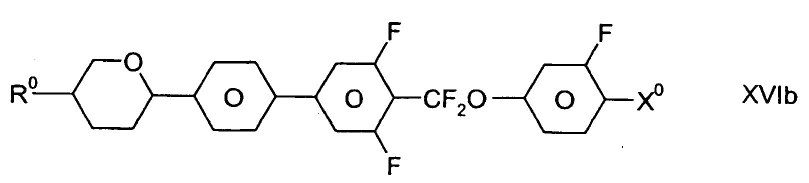 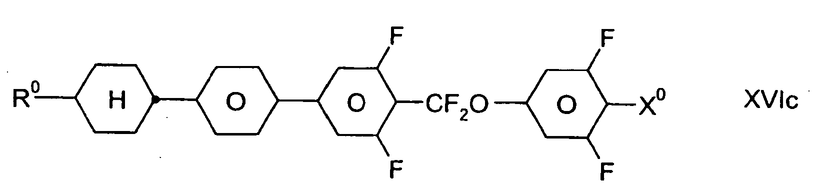 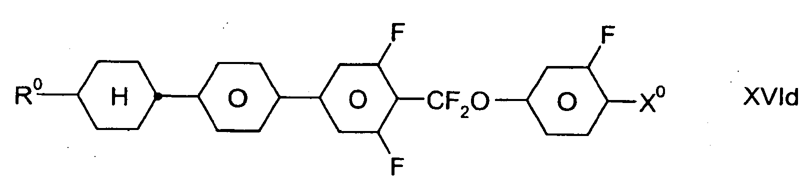 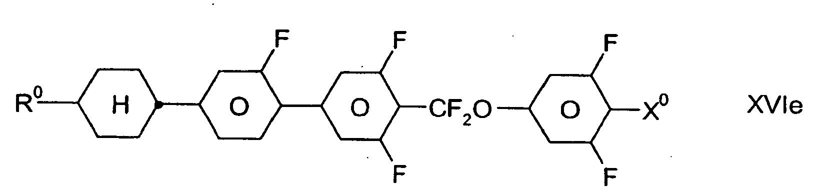 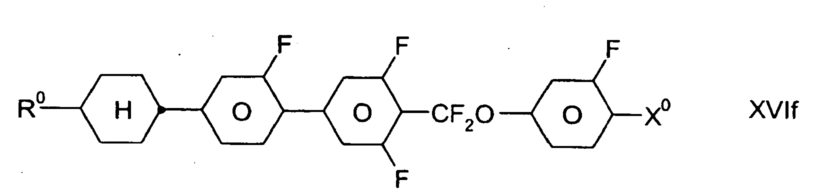 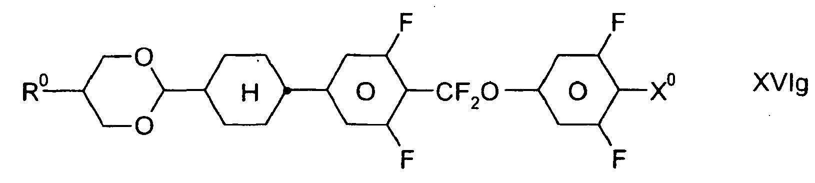 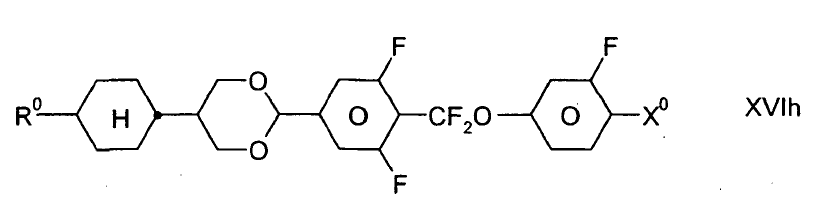 worin R⁰ und X⁰ die oben angegebenen Bedeutungen haben. Vorzugsweise bedeutet R⁰ Alkyl mit 1 bis 8 C-Atomen. X⁰ bedeutet vorzugsweise F, ferner OCF₃. Besonders bevorzugte Verbindungen der Formeln XV und XVa-XVd sind solche, worin Y¹ F und Y² H oder F, vorzugsweise F, bedeutet;
- Das Medium enthält eine oder mehrere Verbindungen der folgenden Formel: 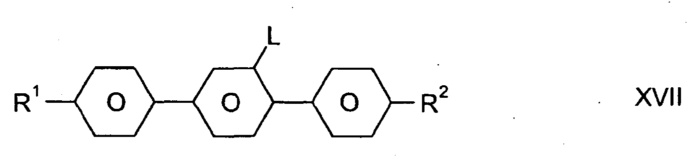 worin R¹ und R² die oben angegebene Bedeutung besitzen, und vorzugsweise jeweils unabhängig voneinander Alkyl mit 1 bis 8 C-Atomen bedeuten. L bedeutet H oder F.
- Das Medium enthält eine oder mehrere Verbindungen der folgenden Formeln: 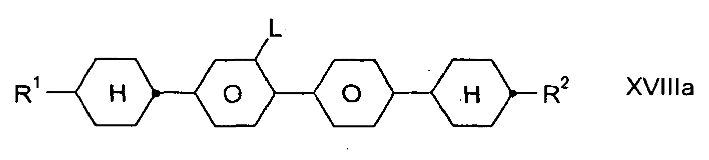 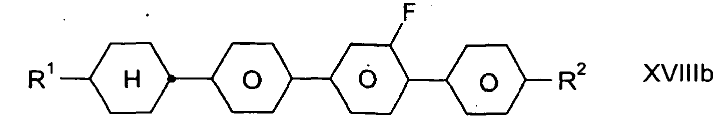 worin R¹ und R² die oben angegebene Bedeutung besitzen, und vorzugsweise jeweils unabhängig voneinander Alkyl mit 1 bis 8 C-Atomen bedeuten. L bedeutet H oder F;
- Das Medium enthält zusätzlich eine oder mehrere Verbindungen ausgewählt aus folgenden Formeln: 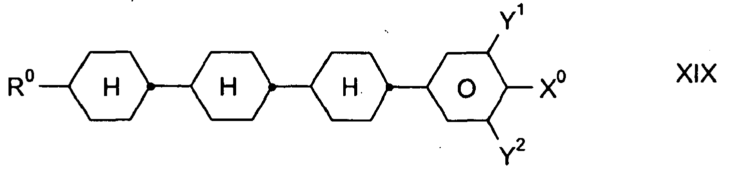 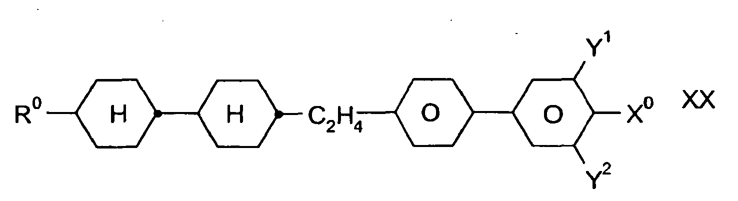 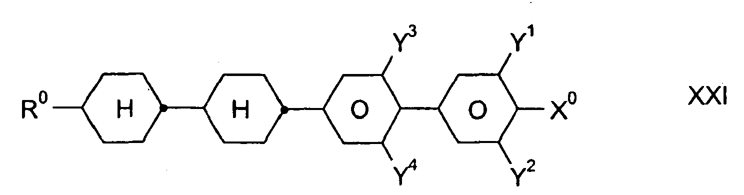 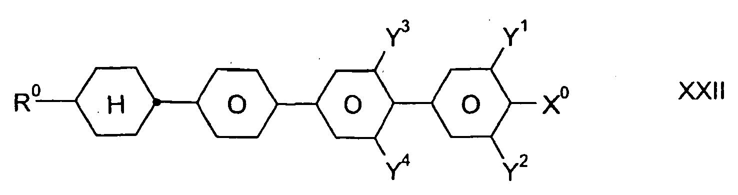 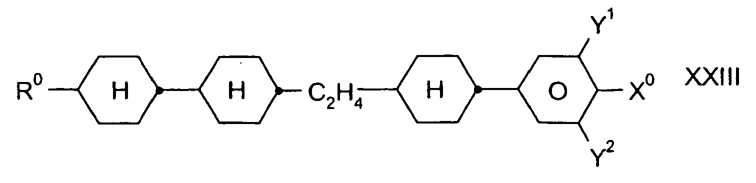 worin R⁰ und X⁰ jeweils unabhängig voneinander eine der oben angegebenen Bedeutungen haben und Y¹⁻⁴ jeweils unabhängig voneinander H oder F bedeuten. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- Das Medium enthält zusätzlich eine oder mehrere Verbindungen ausgewählt aus folgender Formel, 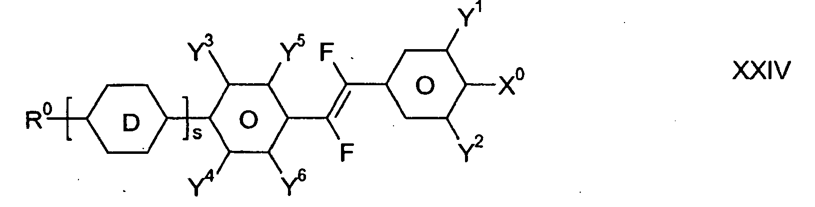 worin R⁰, X⁰ und Y¹⁻⁶ die in Formel I angegebene Bedeutung besitzen, s 0 oder 1, und 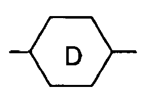 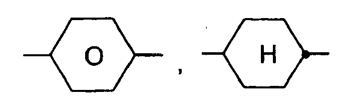 oder 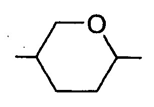 bedeutet. Vorzugsweise bedeutet R⁰ Alkyl mit 1 bis 8 C-Atomen. X⁰ bedeutet vorzugsweise F;
- Die Verbindungen der Formel XXIV sind vorzugsweise ausgewählt aus folgenden Formeln, 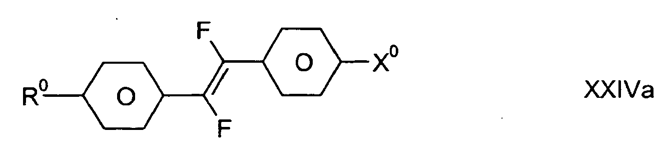 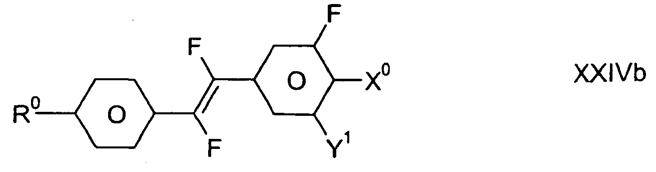 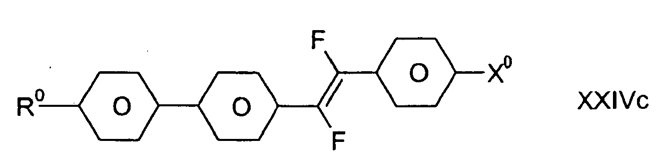 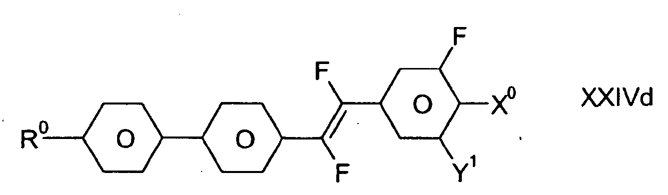 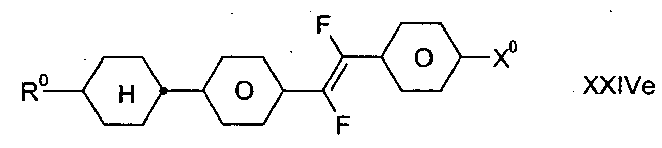 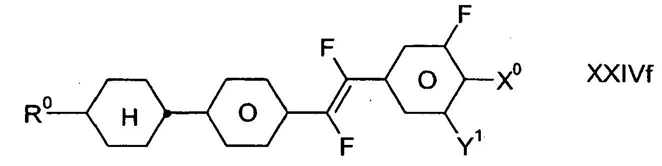 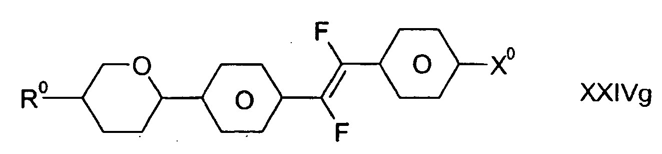 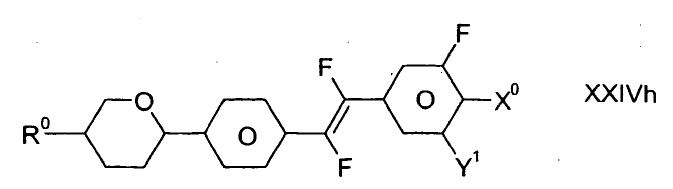 worin R⁰, X⁰ und Y¹ die oben angegebenen Bedeutungen haben. Vorzugsweise bedeutet R⁰ Alkyl mit 1 bis 8 C-Atomen. X⁰ bedeutet vorzugsweise F und Y¹ ist vorzugsweise F; 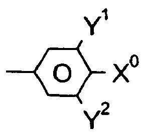 ist vorzugsweise 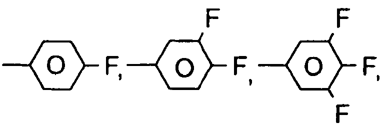 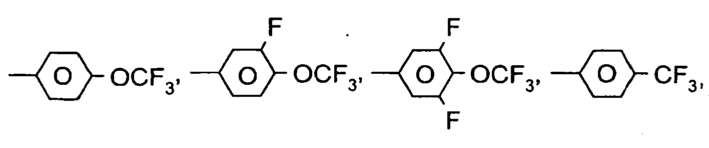 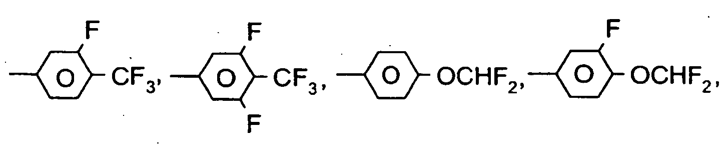 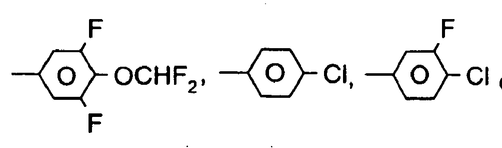 oder 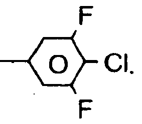
- R⁰ ist geradkettiges Alkyl oder Alkenyl mit 2 bis 7 C-Atomen;
- Das Medium enthält eine oder mehrere Verbindungen der folgenden Formeln: 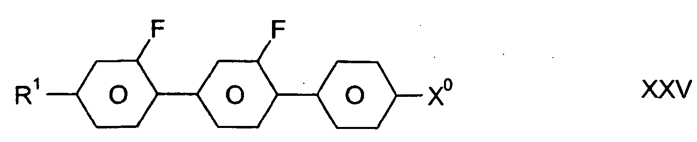 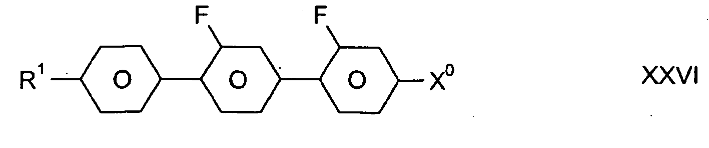 worin R¹ und X⁰ die oben angegebene Bedeutung besitzen. R¹ bedeutet vorzugsweise Alkyl mit 1 bis 8 C-Atomen. X⁰ bedeutet vorzugsweise F oder Cl. In der Formel XXV bedeutet X⁰ ganz besonders bevorzugt Cl.
- Das Medium enthält eine oder mehrere Verbindungen der folgenden Formeln, 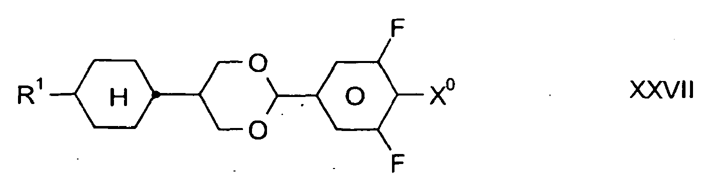 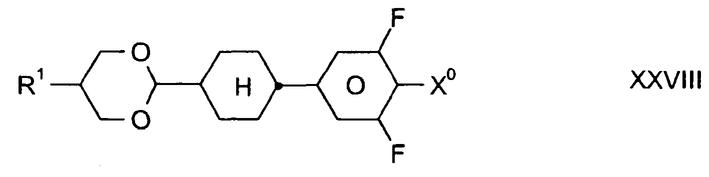 worin R¹ und X⁰ die oben angegebene Bedeutung besitzen. R¹ bedeutet vorzugsweise Alkyl mit 1 bis 8 C-Atomen. X⁰ bedeutet vorzugsweise F;

Nachfolgend werden weitere bevorzugte Ausführungsformen angegeben:
- Das Medium enthält eine, zwei oder mehr Verbindungen der Formel I, insbesondere der Formel Ia, Ib oder Ic;
- Das Medium enthält 2-30 Gew.%, bevorzugt 3-20 Gew.%, besonders bevorzugt 3-15 Gew.%, an Verbindungen der Formel I;
- Das Medium enthält Verbindungen ausgewählt aus den Formeln I, II, III, IX-XIII, XVII und XVIII;
- Der Anteil an Verbindungen der Formeln II, III, IX-XIII, XVII und XVIII im Gesamtgemisch beträgt 40 bis 95 Gew.%;
- Das Medium enthält 10-50 Gew.%, besonders bevorzugt 12-40 Gew.% an Verbindungen der Formel II und/oder III;
- Das Medium enthält 20-70 Gew.%, besonders bevorzugt 25-65 Gew.% an Verbindungen der Formeln IX-XIII;
- Das Medium enthält 4-30 Gew.%, besonders bevorzugt 5-20 Gew.% an Verbindungen der Formel XVII;
- Das Medium enthält 1-20 Gew.%, besonders bevorzugt 2-15 Gew.% an Verbindungen der Formel XVIII.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formeln II bis XXVIII zu einer beträchtlichen Erhöhung der Lichtstabilität und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele besonders bevorzugter Alkenylgruppen sind Vinyl, 1E-Propenyl, 1 E-Butenyl, 1E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors oder mehrfach fluorierte Alkylketten sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel II bis VIII (vorzugsweise II, III, IV und V, insbesondere IIa und IIIa), worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I, IIa und IIIa zeichnen sich durch ihre niedrige Schwellenspannung aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und low-Δn-TFT-Anwendungen, wie z. B. Mobiltelefone und PDAs geeignet. Weiterhin können die erfindungsgemäßen Mischungen in OCB- und IPS-Anzeigen Anwendung finden.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 75 °C, gleichzeitig Rotationsviskositäten γ1 von ≤ 90 mPa·s, besonders bevorzugt ≤ 70 mPa·s zu erreichen, wodurch hervorragende MFK-Anzeigen mit schnellen Schaltzeiten erzielt werden können.

Die dielektrische Anisotropie der erfindungsgemäßen Flüssigkristallmischungen Δε ist vorzugsweise ≥ +3, besonders bevorzugt ≥ +4. Die Mischungen sind außerdem durch kleine Operationsspannungen gekennzeichnet. Die Schwellenspannung der erfindungsgemäßen Flüssigkristallmischungen ist vorzugsweise ≤ 2.0 V. Die Doppelbrechung Δn der erfindungsgemäßen Flüssigkristallmischungen ist vorzugsweise ≥ 0,10, besonders bevorzugt ≥ 0,11.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von-25° bis +70°C.

Es versteht sich, dass durch geeignete Wahl der Komponenten der erfindungsgemäßen Mischungen auch höhere Klärpunkte (z.B. oberhalb 100°C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle den Verbindungen der Formel I Cyanophenylcyclohexane der Formel 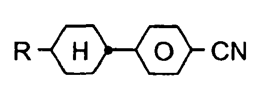 oder Ester der Formel

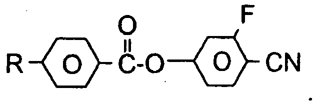

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXVIII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®} der Fa. Ciba, Antioxidantien, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R^{1*}, R^{2*}, L^{1*} und L^{2*}:

| Code fûr R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| | |
|---|---|
| 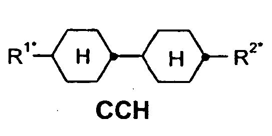 | 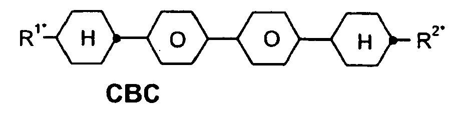 |
| 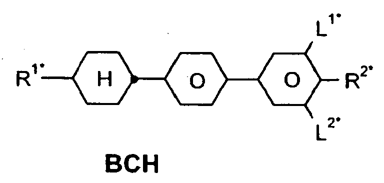 | 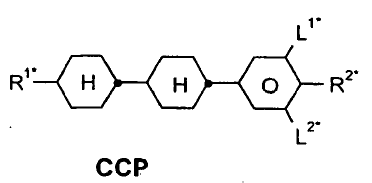 |
| 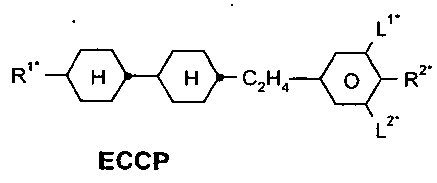 | 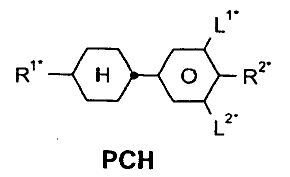 |

**Tabelle B**

| | |
|---|---|
| 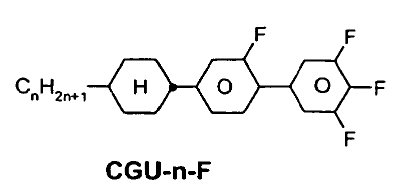 | 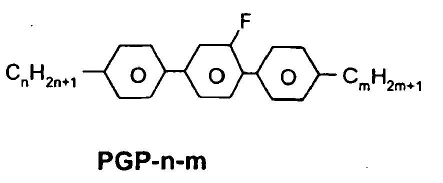 |
| 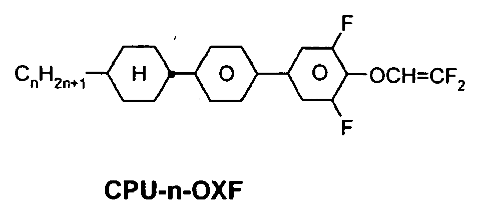 | 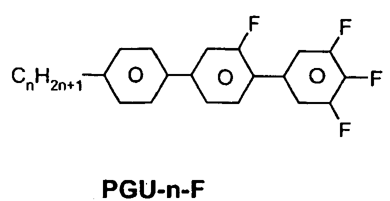 |
| 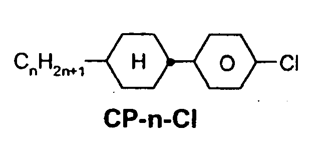 | 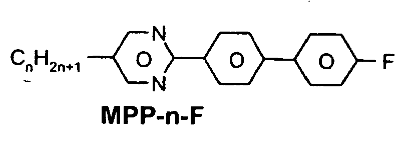 |
| 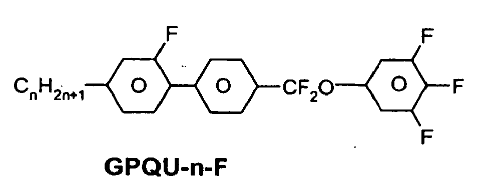 | 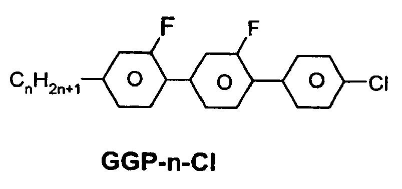 |
| 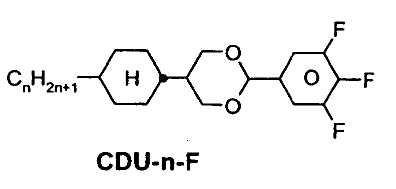 | 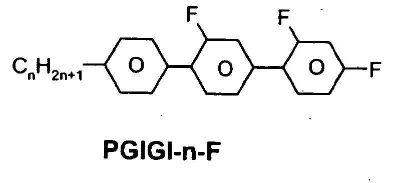 |
| 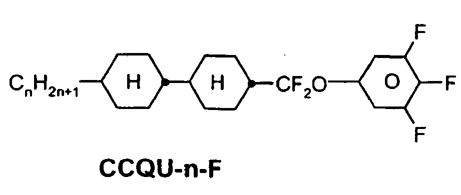 | 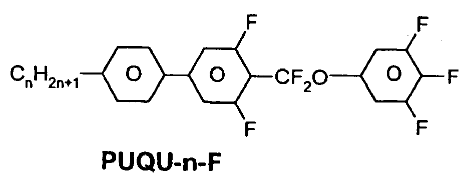 |
| 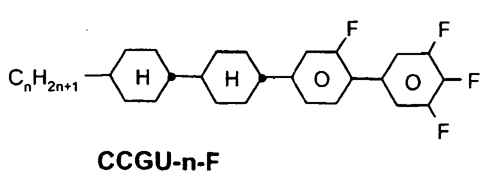 | 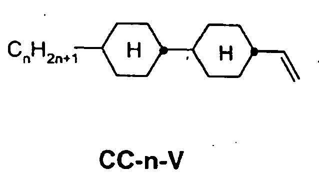 |
| 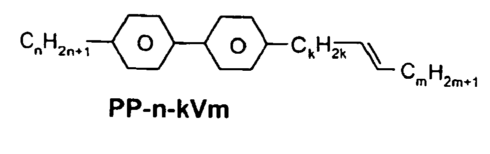 | 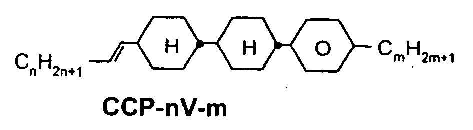 |
| 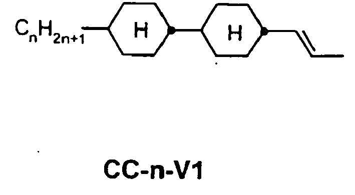 | 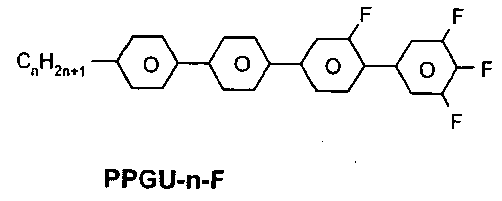 |
| 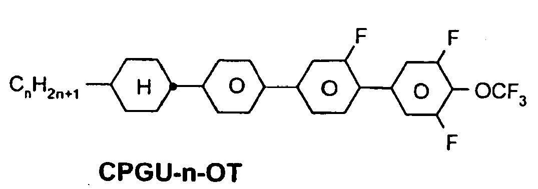 | |
| 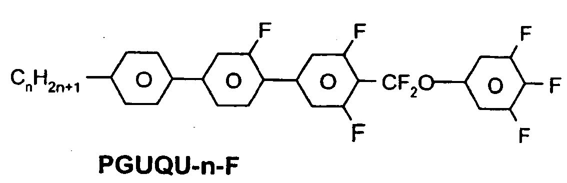 | |
| 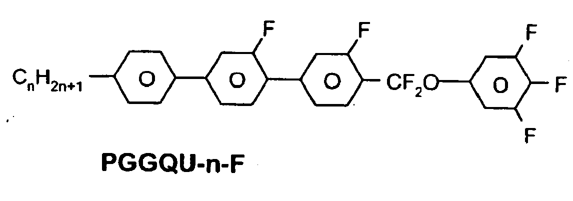 | |
| 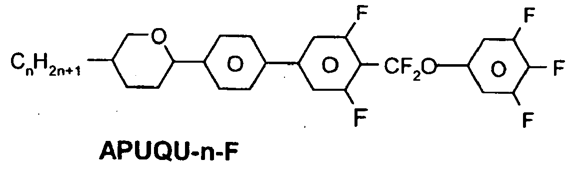 | |
| 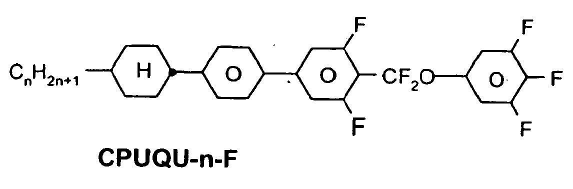 | |

Besonders bevorzugt sind flüssigkristalline Mischungen, die neben den Verbindungen der Formeln I mindestens ein, zwei, drei, vier oder mehr Verbindungen aus der Tabelle B enthalten.

**Tabelle C**

| | |
|---|---|
| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
| 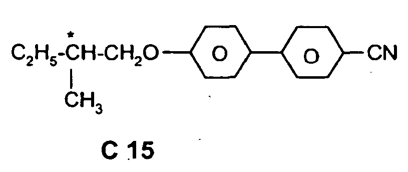 | 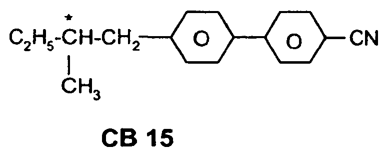 |
| 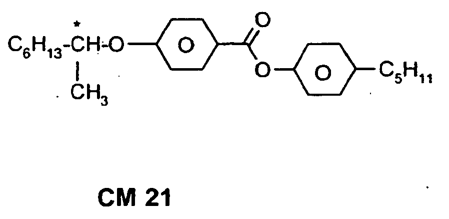 | 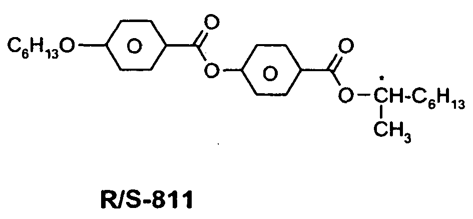 |
| 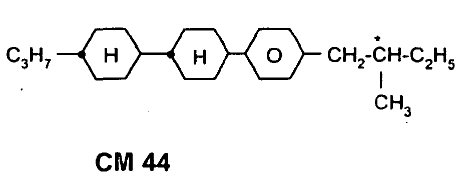 | 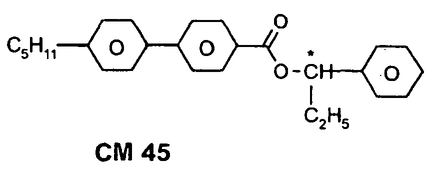 |
| 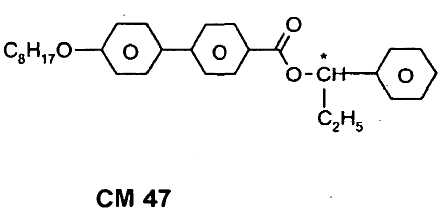 | 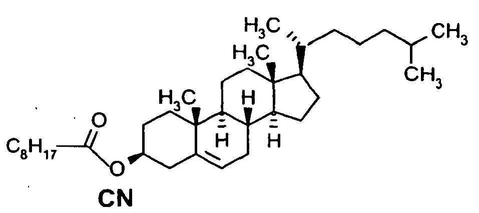 |
| 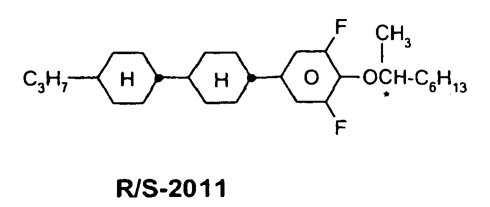 | 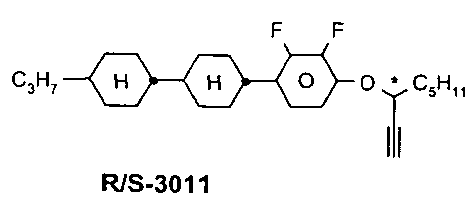 |
| 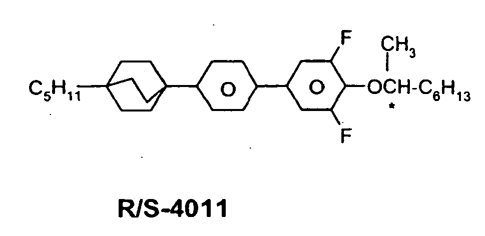 | 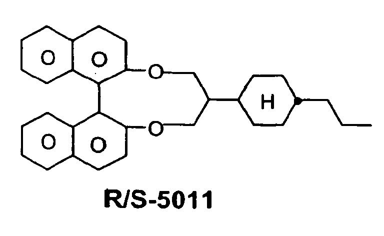 |
| 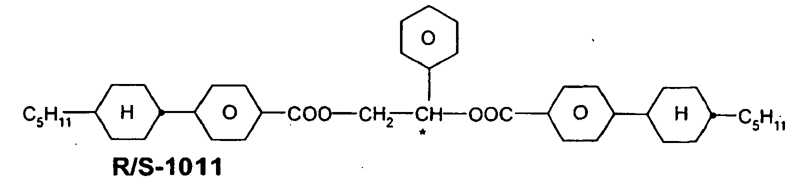 | |

**Tabelle D**

| | |
|---|---|
| Stabilisatoren, die beispielsweise den erfindungsgemäßen Mischungen in Mengen von 0-10 Gew.% zugesetzt werden können, werden nachfolgend genannt. | |
| 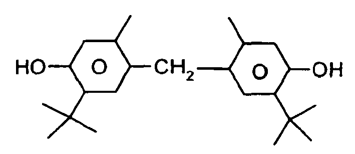 | 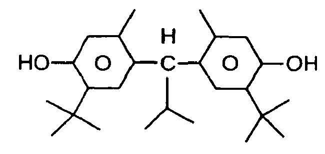 |
| 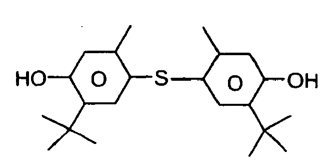 | 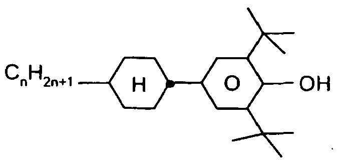 |
| 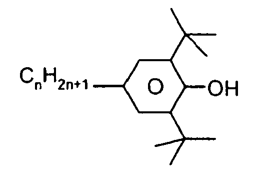 | 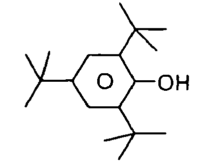 |
| 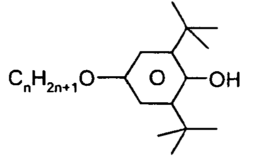 | 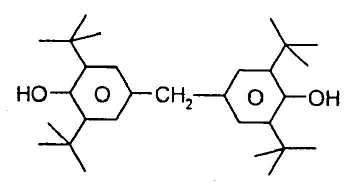 |
| 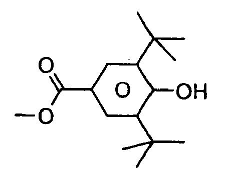 | 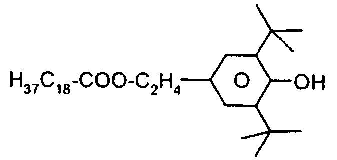 |
| 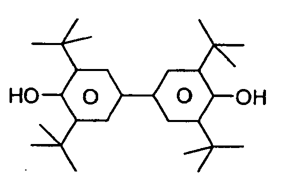 | 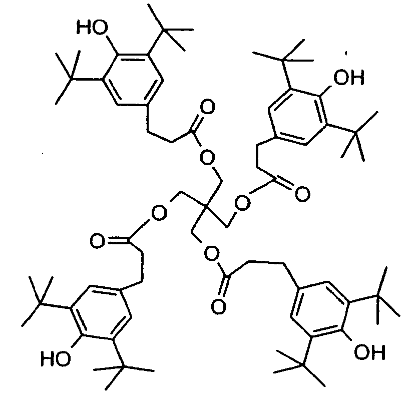 |
| 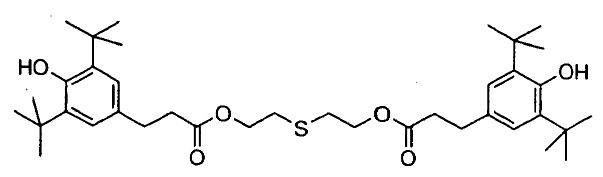 | |
| 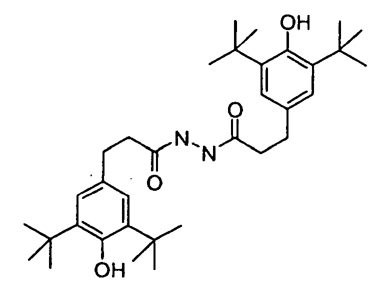 | 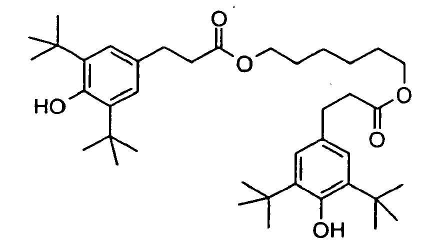 |
| 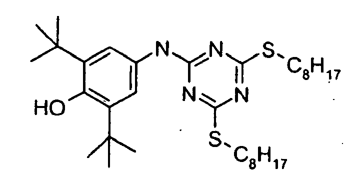 | 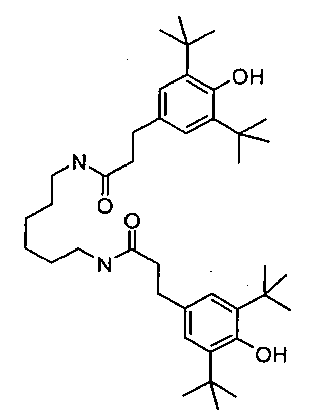 |
| 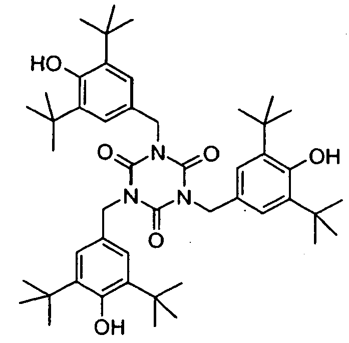 | 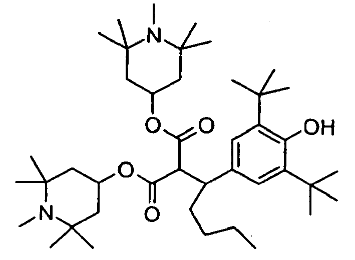 |
| 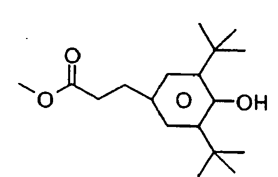 | 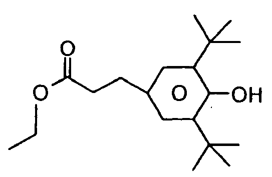 |
| 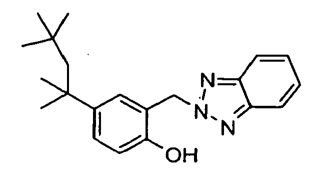 | 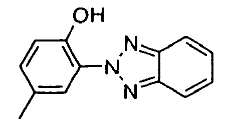 |
| 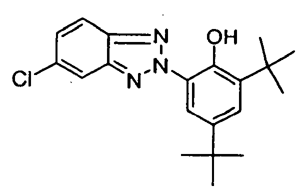 | 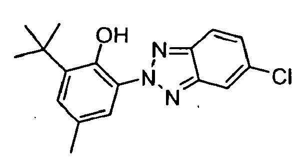 |
| 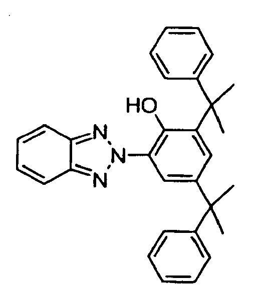 | 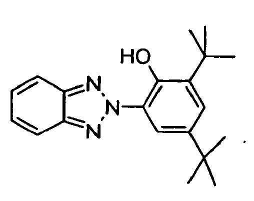 |
| 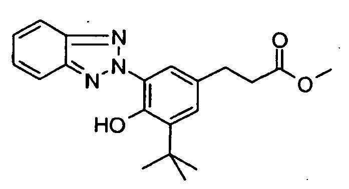 | 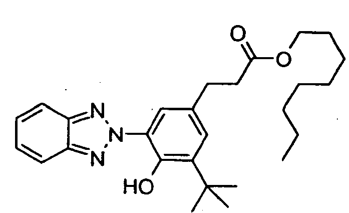 |
| 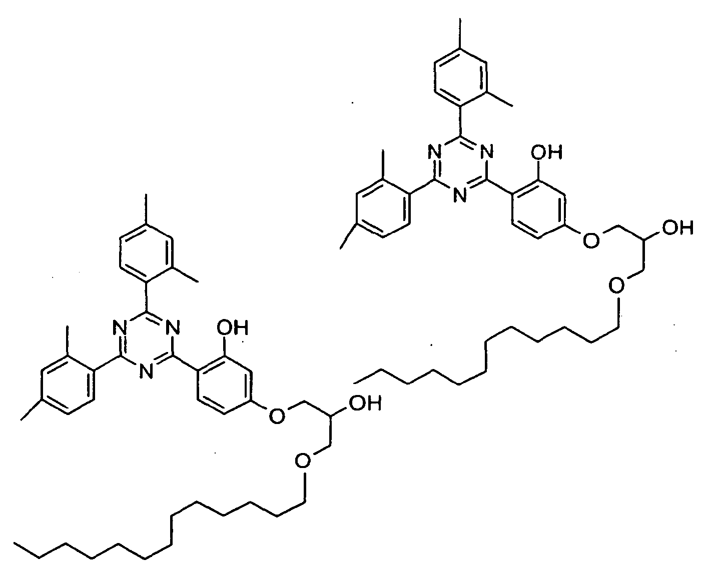 | |
| 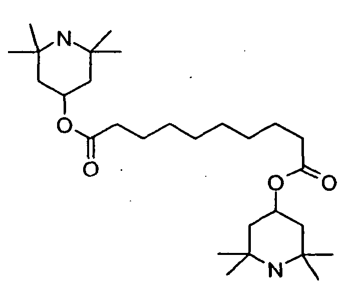 | 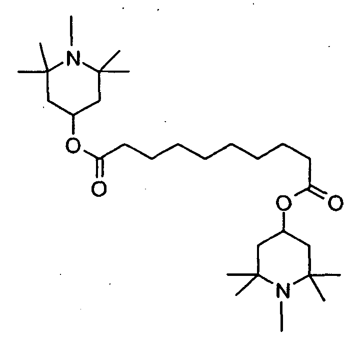 |

Die folgenden Beispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Δn die optische Anisotropie bei 589 nm und 20 °C,
- γ1 die Rotationsviskosität (mPa·s) bei 20 °C,
- V₁₀ die Spannung (V) für 10 % Transmission (Blickrichtung senkrecht zur Plattenoberfläche), (Schwellenspannung),
- V₉₀ die Spannung (V) für 90 % Transmission (Blickrichtung senkrecht zur Plattenoberfläche),
- Δε die dielektrische Anisotropie bei 20°C und 1 kHz (Δε =ε_{∥}- ε_{┴}, wobei ε_{∥} die Dielektrizitätskonstante parallel zu den Moleküllängsachsen und ε_{⊥} die Dielektrizitätskonstante senkrecht dazu bedeutet).
   Die elektro-optischen Daten werden in einer TN-Zelle im 1. Minimum (d.h. bei einem d . Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird. Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben.

### Vergleichsbeispiel 1

| | | | |
|---|---|---|---|
| CC-3-V | 37,00 % | Klärpunkt [°C]: | 75,0 |
| PP-1-2V1 | 7,00 % | Δn [589 nm, 20 °C]: | 0,1152 |
| PUQU-3-F | 15,00 % | Δε [kHz, 20 °C]: | +5,0 |
| CGU-3-F | 3,00 % | γ₁ [mPa·s, 20 °C]: | 59 |
| PGP-2-3 | 5,00 % | V₁₀ [V]: | 1,88 |
| PGP-2-4 | 7,00 % | V₉₀ [V]: | 2,82 |
| CCP-V-1 | 18,00 % | | |
| CCGU-3-F | 8,00 % | | |

### Beispiel 1

| | | | |
|---|---|---|---|
| CC-3-V | 40,00 % | Klärpunkt [°C]: | 75,5 |
| PP-1-2V1 | 7,50 % | Δn [589 nm, 20°C]: | 0,1165 |
| PUQU-3-F | 14,50 % | Δε [kHz, 20 °C]: | +4,9 |
| PGP-2-3 | 5,00 % | γ₁ [mPa·s, 20 °C]: | 57 |
| PGP-2-4 | 5,00 % | V₁₀ [V]: | 1,94 |
| CCP-V-1 | 18,00 % | V₉₀ [V]: | 2,89 |
| PGGQU-3-F | 7,00 % | | |
| CBC-33 | 3,00 % | | |

Die Mischung weist gegenüber der Mischung aus Vergleichsbeispiel 1 eine geringere Viskosität bei gleicher Doppelbrechung und gleichem Klärpunkt auf.

### Beispiel 2

| | | | |
|---|---|---|---|
| CC-3-V | 36,00 % | Klärpunkt [°C]: | 74,5 |
| CC-3-V1 | 7,00 % | Δn [589 nm, 20 °C]: | 0,1358 |
| PP-1-2V1 | 7,50 % | Δε [kHz, 20 °C]: | +4,8 |
| PGU-3-F | 8,50 % | γ1 [mPa·s, 20 °C]: | 58 |
| PUQU-3-F | 3,00 % | V₁₀ [V]: | 2,02 |
| PGP-2-3 | 6,00 % | V₉₀ [V]: | 2,95 |
| PGP-2-4 | 6,00 % | | |
| PGP-2-5 | 8,00 % | | |
| CCP-V-1 | 8,00 % | | |
| PGUQU-3-F | 9,00 % | | |
| CBC-33 | 1,00 % | | |

### Beispiel 3

| | | | |
|---|---|---|---|
| CC-3-V | 38,00 % | Klärpunkt [°C]: | 74,5 |
| CC-3-V1 | 5,00 % | Δn [589 nm, 20 °C]: | 0,1362 |
| PP-1-2V1 | 7,00 % | Δε [kHz, 20 °C]: | +5,1 |
| PGU-3-F | 9,00 % | γ₁ [mPa·s, 20 °C]: | 59 |
| PUQU-3-F | 3,00 % | V₁₀ [V]: | 1,94 |
| PGP-2-3 | 5,00 % | V₉₀[V]: | 2,84 |
| PGP-2-4 | 6,00 % | | |
| PGP-2-5 | 8,00 % | | |
| CCP-V-1 | 9,00 % | | |
| PGUQU-3-F | 8,00 % | | |
| PPGU-3-F | 2,00 % | | |

### Beispiel 4

| | | | |
|---|---|---|---|
| CC-3-V | 39,50 % | Klärpunkt [°C]: | 70,0 |
| CC-3-V1 | 6,00 % | Δn [589 nm, 20 °C]: | 0,1274 |
| PP-1-2V1 | 7,00 % | Δε [kHz, 20 °C]: | +4,7 |
| PGU-3-F | 7,00 % | γ₁ [mPa·s, 20 °C]: | 53 |
| PUQU-3-F | 4,50 % | V₁₀ [V]: | 1,96 |
| PGP-2-3 | 5,00 % | V₉₀ [V]: | 2,87 |
| PGP-2-4 | 6,00 % | | |
| PGP-2-5 | 7,00 % | | |
| CCP-V-1 | 9,00 % | | |
| PGUQU-3-F | 9,00 % | | |

### Beispiel 5

| | | | |
|---|---|---|---|
| CC-3-V | 39,00 % | Klärpunkt [°C]: | 71,5 |
| CC-3-V1 | 6,50 % | Δn [589 nm, 20°C]: | 0,1284 |
| PP-1-2V1 | 7,00 % | Δε [kHz,20°C]: | +4,7 |
| PGU-3-F | 5,50 % | γ₁ [mPa·s, 20 °C]: | 51 |
| PUQU-3-F | 3,00 % | V₁₀[V]: | 1,99 |
| CPU-3-OXF | 8,00 % | V₉₀ [V]: | 2,90 |
| PGP-2-3 | 5,00 % | | |
| PGP-2-4 | 6,00 % | | |
| PGP-2-5 | 6,50 % | | |
| CCP-V-1 | 5,50 % | | |
| PGUQU-3-F | 8,00 % | | |

### Beispiel 6

| | | | |
|---|---|---|---|
| CC-3-V | 39,00 % | Klärpunkt [°C]: | 70,5 |
| CC-3-V1 | 6,50 % | Δn [589 nm, 20 °C]: | 0,1290 |
| PP-1-2V1 | 7,00 % | Δε [kHz, 20 °C]: | +4,8 |
| PGU-3-F | 5,50 % | γ₁ [mPa·s, 20 °C]: | 56 |
| PUQU-3-F | 3,00 % | V₁₀ [V]: | 1,95 |
| CPU-3-OXF | 8,00°% | V₉₀ [V]: | 2,87 |
| PGP-2-3 | 5,00 % | | |
| PGP-2-4 | 6,00 % | | |
| PGP-2-5 | 6,50 % | | |
| CCP-V-1 | 5,50 % | | |
| APUQU-3-F | 3,00 % | | |
| PGUQU-3-F | 8,00 % | | |

### Beispiel 7

| | | | |
|---|---|---|---|
| CC-3-V | 41,00 % | Klärpunkt [°C]: | 70,5 |
| CC-3-V1 | 7,00 % | Δn [589 nm, 20 °C]: | 0,1276 |
| PP-1-2V1 | 6,50 % | Δε [kHz, 20°C]: | +4,9 |
| PGU-3-F | 5,50 % | γ₁ [mPa·s, 20 °C]: | 54 |
| PUQU-3-F | 3,00 % | V₁₀ [V]: | 1,92 |
| PGP-2-3 | 6,00 % | V₉₀ [V]: | 2,81 |
| PGP-2-4 | 6,00 % | | |
| PGP-2-5 | 8,00 % | | |
| CCP-V-1 | 5,00 % | | |
| APUQU-3-F | 3,00 % | | |
| PGUQU-3-F | 9,00 % | | |

## Patentansprüche

1. Flüssigkristallines Medium, **dadurch gekennzeichnet, dass** es eine oder mehrere Verbindungen der Formel I, 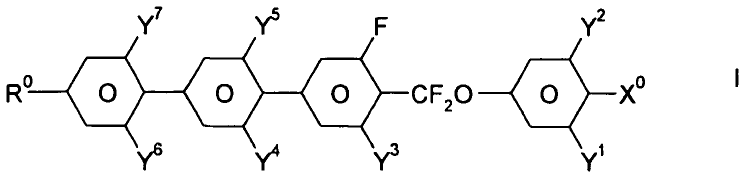 worin
R⁰ einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 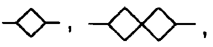 -O-, -CO-O- oder -O-CO- so ersetzt sein können, dass O-Atome nicht direkt miteinander verknüpft sind,
X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen, und
Y¹⁻⁷ jeweils unabhängig voneinander H oder F
bedeuten,
und
eine oder mehrere Verbindungen der Formel XIII, 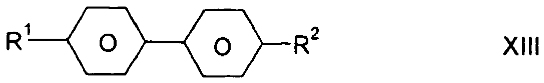 worin
R¹ und R² jeweils unabhängig voneinander n-Alkyl, Alkoxy, Oxaalkyl, Fluoralkyl oder Alkenyl mit jeweils bis zu 9 C-Atomen bedeuten, wobei mindestens einer der Reste R¹ und R² Alkenyl mit 2 bis 7 C-Atomen bedeutet,
und
eine oder mehrere Verbindungen der Formel III, 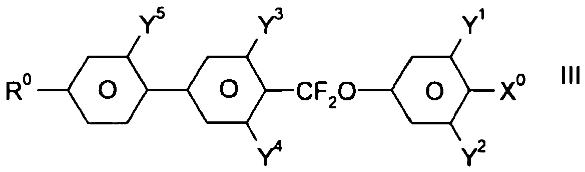 worin R⁰, X⁰ und Y¹⁻⁵ die oben angegebene Bedeutung besitzen,
enthält.

2. Flüssigkristallines Medium nach Anspruch 1, **dadurch gekennzeichnet, dass** es eine oder mehrere Verbindungen ausgewählt aus folgenden Formeln enthält, 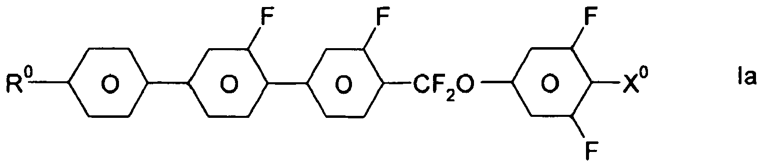 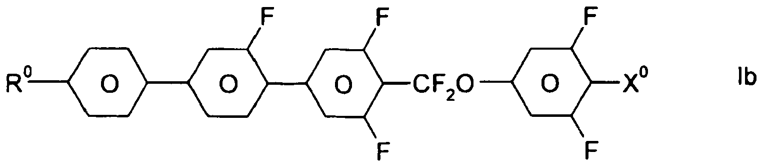 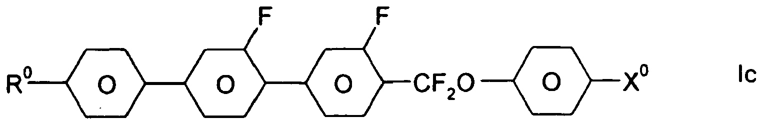 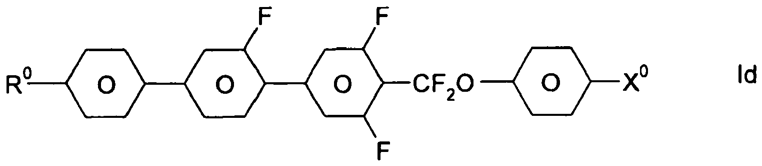 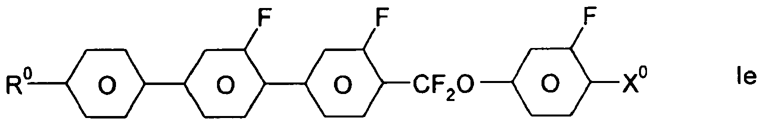 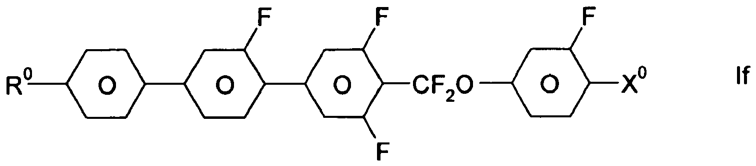 worin R⁰ und X⁰ die in Anspruch 1 angegebene Bedeutung haben.

3. Flüssigkristallines Medium nach Anspruch 1 oder 2, **dadurch gekennzeichnet, dass** es zusätzlich eine oder mehrere Verbindungen der Formel II enthält, 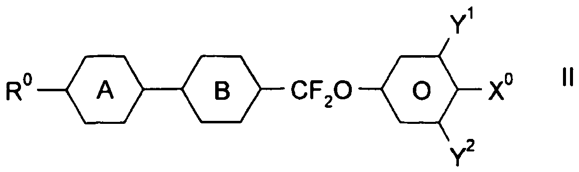 worin R⁰, X⁰ und Y¹⁻⁵ die in Anspruch 1 angegebene Bedeutung besitzen, und 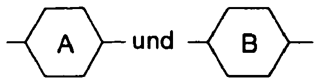 jeweils unabhängig voneinander 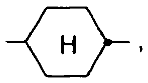 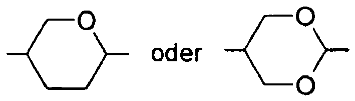 bedeuten.

4. Flüssigkristallines Medium nach einem oder mehreren der Ansprüche 1 bis 3, **dadurch gekennzeichnet, dass** es zusätzlich eine oder mehrere Verbindungen ausgewählt aus folgenden Formeln enthält, 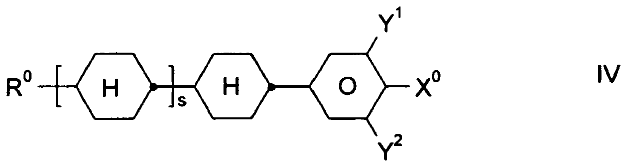 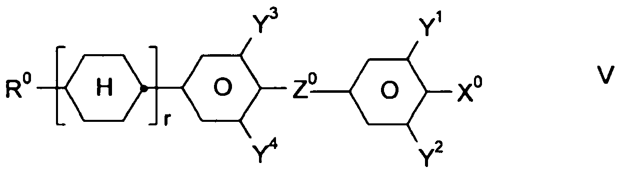 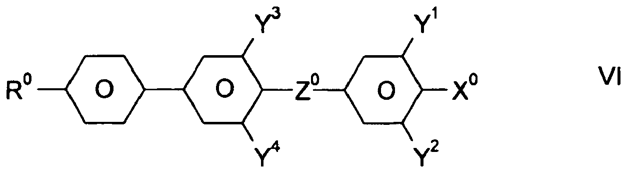 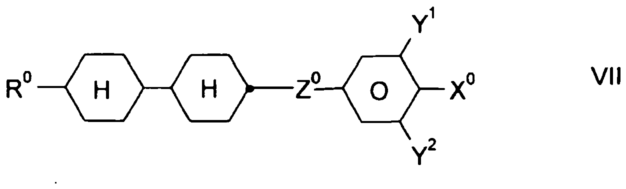 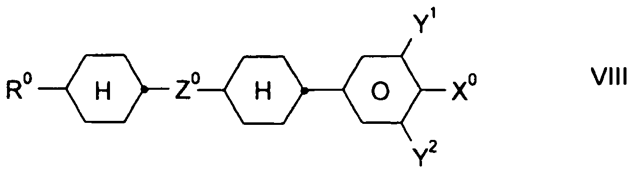 worin R⁰, X⁰ und Y¹⁻⁴ die in Anspruch 1 angegebenen Bedeutungen besitzen,
z⁰ -C₂H₄-, -(CH₂)₄-, -CH=CH-, -CF=CF-, -C₂F₄-, -CH₂CF₂-, - CF₂CH₂-, -CH₂O-, -OCH₂-, -COO- oder -OCF₂-, in Formel V und VI auch eine Einfachbindung, in Formel V und VIII auch -CF₂O-, und
r 0 oder 1 und
s 0 oder 1
bedeuten.

5. Flüssigkristallines Medium nach einem oder mehreren der Ansprüche 1 bis 4, **dadurch gekennzeichnet, dass** es zusätzlich eine oder mehrere Verbindungen ausgewählt aus folgenden Formeln enthält, 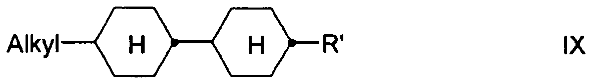 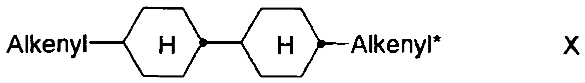 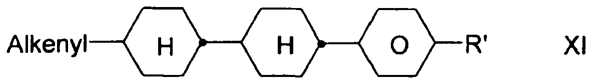 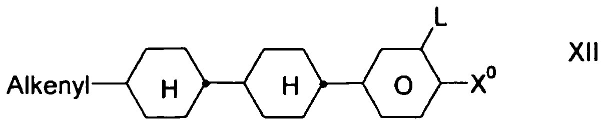 worin X⁰ die in Anspruch 1 angegebene Bedeutung besitzt,
L H oder F,
"Alkyl" C₁₋₇-Alkyl,
R' C₁₋₇-Alkyl, C₁₋₆-Alkoxy oder C₂₋₇-Alkenyl, und
"Alkenyl" und "Alkenyl*" jeweils unabhängig voneinander C₂₋₇-Alkenyl
bedeuten.

6. Flüssigkristallines Medium nach einem oder mehreren der Ansprüche 1 bis 5, **dadurch gekennzeichnet, dass** in den obenstehenden Formeln X⁰ F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ oder CH=CF₂ bedeutet.

7. Flüssigkristallines Medium nach einem oder mehreren der Ansprüche 1 bis 6, **dadurch gekennzeichnet, dass** die Verbindung der Formel XIII ausgewählt ist aus den folgenden Formeln, 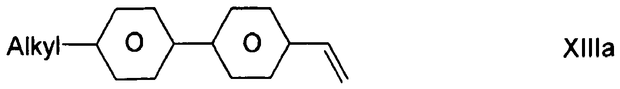 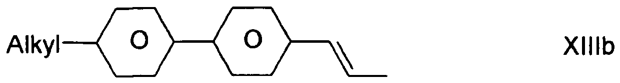 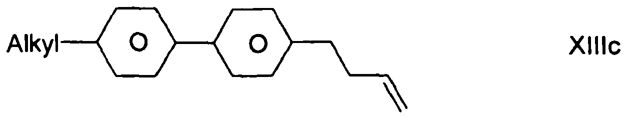 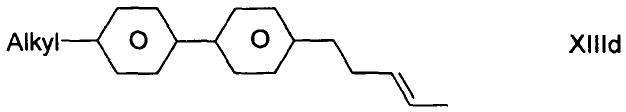 worin "Alkyl" C₁₋₇-Alkyl bedeutet.

8. Flüssigkristallines Medium nach einem oder mehreren der Ansprüche 1 bis 7, **dadurch gekennzeichnet, dass** es zusätzlich eine oder mehrere Verbindungen der folgenden Formel enthält, 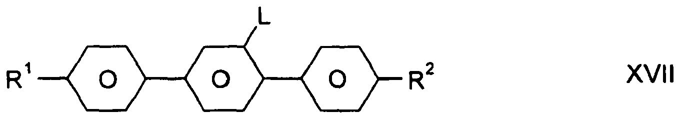 worin R¹ und R² jeweils unabhängig voneinander n-Alkyl, Alkoxy, Oxaalkyl, Fluoralkyl oder Alkenyl mit jeweils bis zu 9 C-Atomen, und L H oder F bedeuten.

9. Flüssigkristallines Medium nach einem oder mehreren der Ansprüche 1 bis 8, **dadurch gekennzeichnet, dass** es
| |
|---|
| 2-30 Gew.% an Verbindungen der Formel I, |
| 10-60 Gew.% an Verbindungen der Formel II und/oder III, |
| 20-70 Gew.% an Verbindungen der Formeln IX-XIII, |
| 4-30 Gew.% an Verbindungen der Formel XVII, |
enthält.

10. Flüssigkristallines Medium nach einem oder mehreren der Ansprüche 1 bis 9, **dadurch gekennzeichnet, dass** es 0-10 Gew. % Stabilisatoren enthalten kann.

11. Flüssigkristallines Medium nach einem oder mehreren der Ansprüche 1 bis 10, **dadurch gekennzeichnet, dass** es Dotierstoffe enthalten kann.

12. Verfahren zur Herstellung eines flüssigkristallinen Mediums nach einem oder mehreren der Ansprüche 1 bis 11, **dadurch gekennzeichnet, dass** man eine oder mehrere Verbindungen der Formeln I, XIII und III wie in Anspruch 1 definiert mit einer oder mehreren Verbindungen gemäß einem oder mehreren der Ansprüche 2 bis 8 oder mit weiteren flüssigkristallinen Verbindungen und/oder Additiven mischt.

13. Verwendung eines flüssigkristallinen Mediums nach einem oder mehreren der Ansprüche 1 bis 11 für elektrooptische Zwecke.

14. Verwendung eines flüssigkristallinen Mediums nach Anspruch 13 in TN-, TFT-, IPS- oder OCB-Anzeigen.

15. Elektrooptische Flüssigkristallanzeige enthaltend ein flüssigkristallines Medium nach einem oder mehreren der Ansprüche 1 bis 11.

## Claims

1. Liquid-crystalline medium, **characterised in that** it comprises one or more compounds of the formula I, 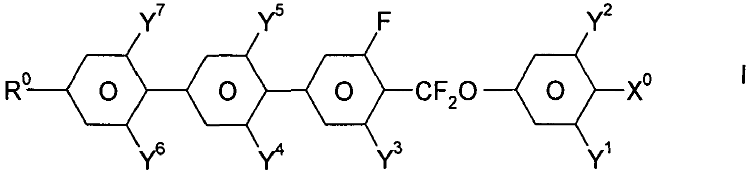 in which
R⁰ denotes a halogenated or unsubstituted alkyl or alkoxy radical having 1 to 15 C atoms, where, in addition, one or more CH₂ groups in these radicals may each be replaced, independently of one another, by -C≡C-, -CF₂O-, -CH=CH-, 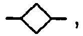 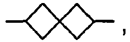 -O-, -CO-O- or -O-CO- in such a way that O atoms are not linked directly to one another,
X⁰ denotes F, Cl, CN, SF₅, SCN, NCS, a halogenated alkyl radical, a halogenated alkenyl radical, a halogenated alkoxy radical or a halogenated alkenyloxy radical having up to 6 C atoms, and
Y¹⁻⁷ each, independently of one another, denote H or F,
and
one or more compounds of the formula XIII, 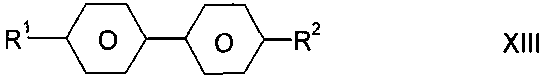 in which
R¹ and R² each, independently of one another, denote n-alkyl, alkoxy, oxaalkyl, fluoroalkyl or alkenyl, each having up to 9 C atoms, where at least one of the radicals R¹ and R² denotes alkenyl having 2 to 7 C atoms,
and
one or more compounds of the formula III, 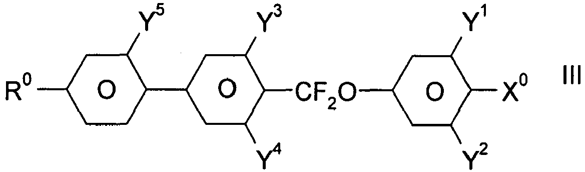 in which R⁰, X⁰ and Y¹⁻⁵ have the meaning indicated above.

2. Liquid-crystalline medium according to Claim 1, **characterised in that** it comprises one or more compounds selected from the following formulae, 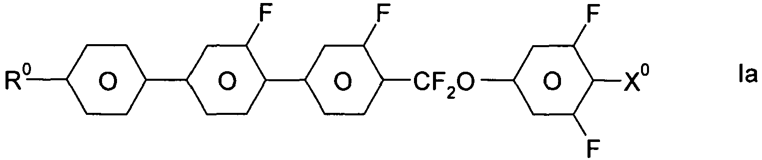 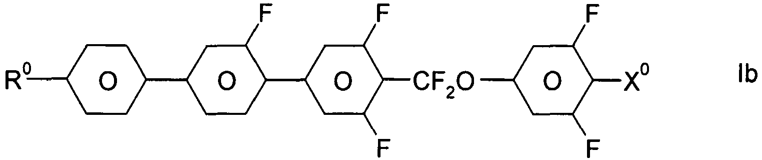 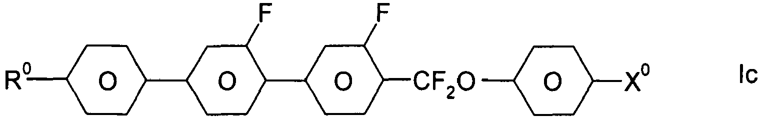 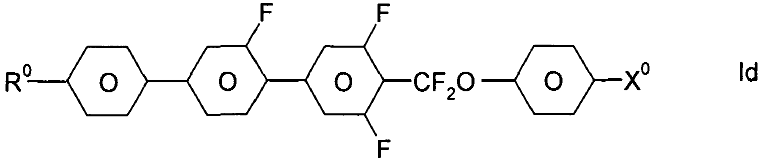 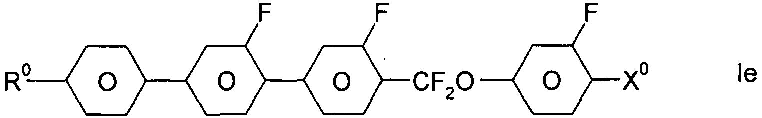 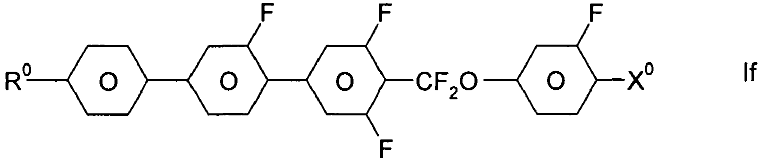 in which R⁰ and X⁰ have the meaning indicated in Claim 1.

3. Liquid-crystalline medium according to Claim 1 or 2, **characterised in that** it additionally comprises one or more compounds of the formula II, 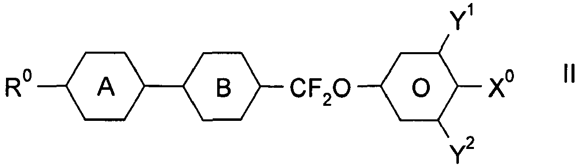 in which R⁰, X⁰ and Y¹⁻⁵ have the meaning indicated in Claim 1, and 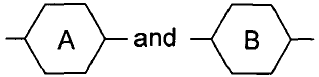 each, independently of one another, denote

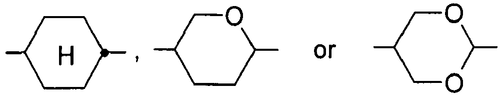

4. Liquid-crystalline medium according to one or more of Claims 1 to 3, **characterised in that** it additionally comprises one or more compounds selected from the following formulae, 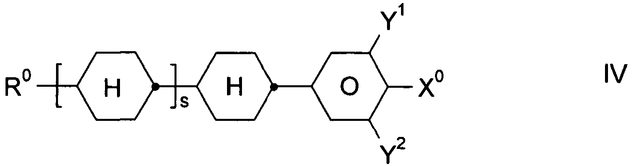 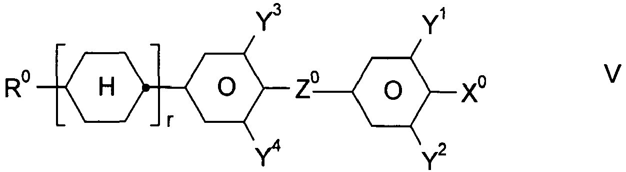 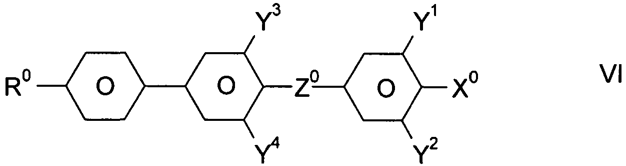 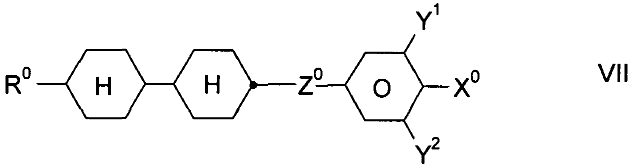 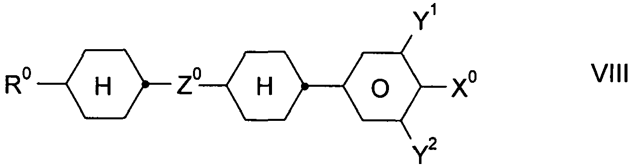 in which R⁰, X⁰ and Y¹⁻⁴ have the meanings indicated in Claim 1,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in formulae V and VI also a single bond, in formulae V and VIII also -CF₂O-, and
r denotes 0 or 1, and
s denotes 0 or 1.

5. Liquid-crystalline medium according to one or more of Claims 1 to 4, **characterised in that** it additionally comprises one or more compounds selected from the following formulae, 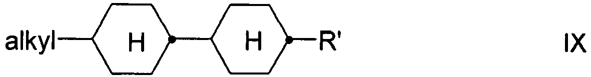 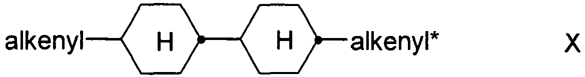 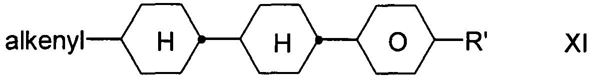 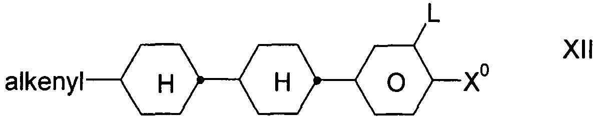 in which X⁰ has the meaning indicated in Claim 1,
L denotes H or F,
"alkyl" denotes C₁₋₇-alkyl,
R' denotes C₁₋₇-alkyl, C₁₋₆-alkoxy or C₂₋₇-alkenyl, and "alkenyl" and "alkenyl*" each, independently of one another, denote C₂₋₇-alkenyl.

6. Liquid-crystalline medium according to one or more of Claims 1 to 5, **characterised in that**, in the above formulae, X⁰ denotes F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂.

7. Liquid-crystalline medium according to one or more of Claims 1 to 6, **characterised in that** the compound of the formula XIII is selected from the following formulae, 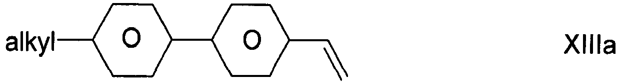 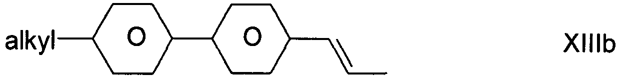 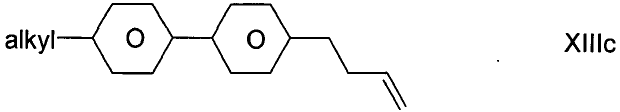 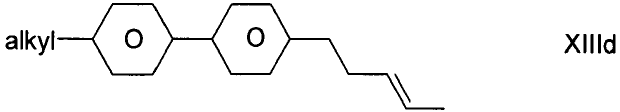 in which "alkyl" denotes C₁₋₇-alkyl.

8. Liquid-crystalline medium according to one or more of Claims 1 to 7, **characterised in that** it additionally comprises one or more compounds of the following formula, 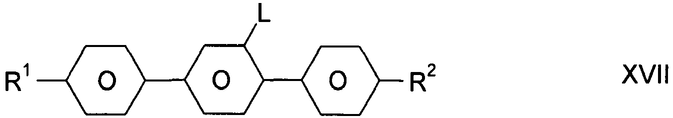 in which R¹ and R² each, independently of one another, denote n-alkyl, alkoxy, oxaalkyl, fluoroalkyl or alkenyl, each having up to 9 C atoms, and L denotes H or F.

9. Liquid-crystalline medium according to one or more of Claims 1 to 8, **characterised in that** it comprises
| |
|---|
| 2-30% by weight of compounds of the formula I, |
| 10-60% by weight of compounds of the formulae II and/or III, |
| 20-70% by weight of compounds of the formulae IX-XIII, |
| 4-30% by weight of compounds of the formula XVII. |

10. Liquid-crystalline medium according to one or more of Claims 1 to 9, **characterised in that** it may comprise 0-10% by weight of stabilisers.

11. Liquid-crystalline medium according to one or more of Claims 1 to 10, **characterised in that** it may comprise dopants.

12. Process for the preparation of a liquid-crystalline medium according to one or more of Claims 1 to 11, **characterised in that** one or more compounds of the formulae I , XIII and III as defined in Claim 1 are mixed with one or more compounds according to one or more of Claims 2 to 8 or with further liquid-crystalline compounds and/or additives.

13. Use of a liquid-crystalline medium according to one or more of Claims 1 to 11 for electro-optical purposes.

14. Use of a liquid-crystalline medium according to Claim 13 in TN, TFT, IPS or OCB displays.

15. Electro-optical liquid-crystal display containing a liquid-crystalline medium according to one or more of Claims 1 to 11.

## Revendications

1. Milieu cristallin liquide, **caractérisé en ce qu'**il comprend un ou plusieurs composés de la formule I, 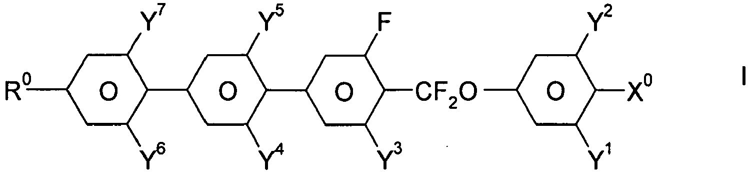 dans laquelle
R⁰ représente un radical alkyle ou alcoxy halogéné ou non substitué comportant de 1 à 15 atomes de C, où, en outre, un ou plusieurs groupes CH₂ dans ces radicaux peuvent chacun être remplacés, indépendamment les uns des autres, par -C≡C-, -CF₂O-, -CH=CH-, 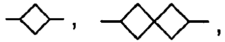 -O-, -CO-O- ou -O-COde telle sorte que des atomes de O ne soient pas liés directement les uns aux autres,
X⁰ représente F, Cl, CN, SF₅, SCN, NCS, un radical alkyle halogéné, un radical alkényle halogéné, un radical alcoxy halogéné ou un radical alkényloxy halogéné comportant jusqu'à 6 atomes de C, et
Y¹⁻⁷ représentent, chacun indépendamment des autres, H ou F,
et
un ou plusieurs composés de la formule XIII, 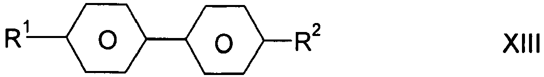 dans laquelle
R¹ et R² représentent, chacun indépendamment de l'autre, n-alkyle, alcoxy, oxaalkyle, fluoroalkyle ou alkényle dont chacun comporte jusqu'à 9 atomes de C, où au moins l'un des radicaux R¹ et R² représente alkényle comportant de 2 à 7 atomes de C,
et
un ou plusieurs composés de la formule III, 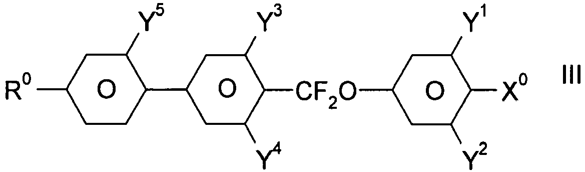 dans laquelle R⁰, X⁰ et Y¹⁻⁵ présentent la signification indiquée ci-avant.

2. Milieu cristallin liquide selon la revendication 1, **caractérisé en ce qu'**il comprend un ou plusieurs composés choisis parmi les formules qui suivent : 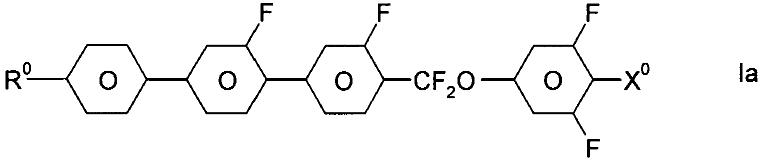 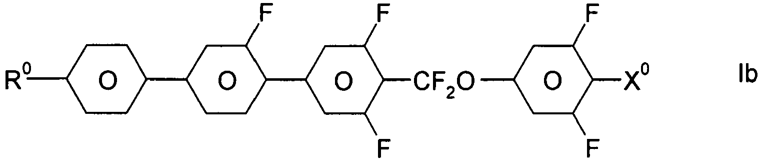 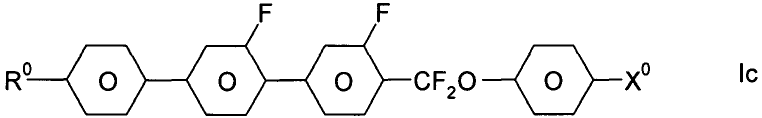 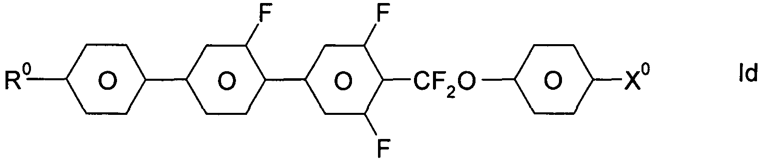 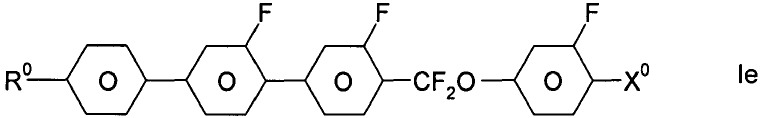 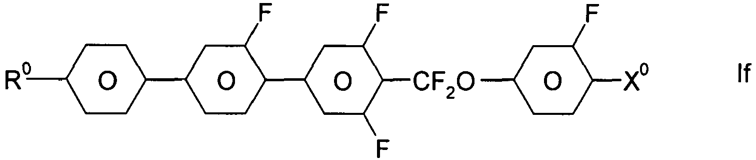 dans lesquelles R⁰ et X⁰ présentent la signification indiquée selon la revendication 1.

3. Milieu cristallin liquide selon la revendication 1 ou 2, **caractérisé en ce qu'**il comprend additionnellement un ou plusieurs composés de la formule II : 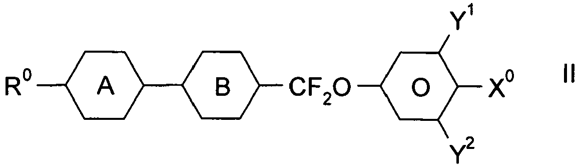 dans laquelle R⁰, X⁰ et Y¹⁻⁵ présentent la signification indiquée selon la revendication 1, et 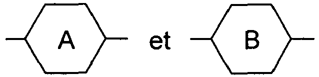 représentent, chacun indépendamment de l'autre,

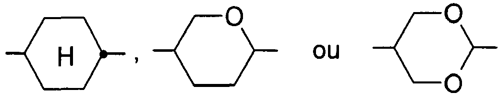

4. Milieu cristallin liquide selon une ou plusieurs des revendications 1 à 3, **caractérisé en ce qu'**il comprend additionnellement un ou plusieurs composés choisis parmi les formules qui suivent : 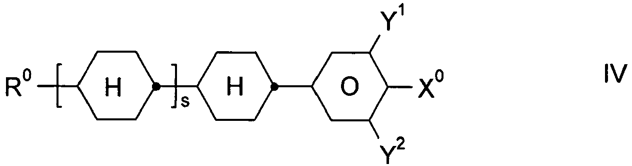 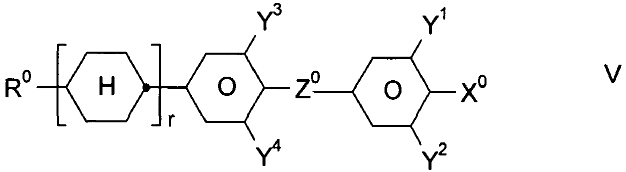 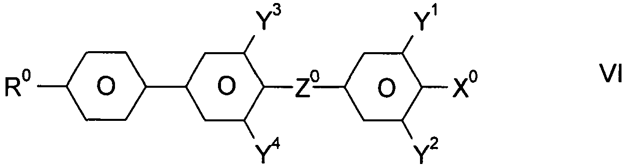 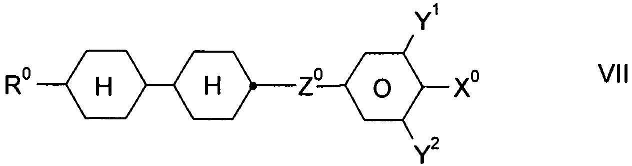 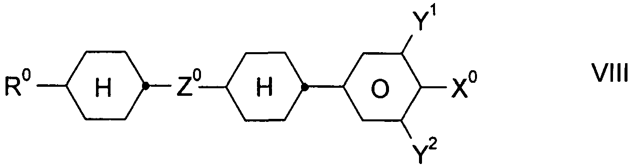 dans lesquelles R⁰, X⁰ et Y¹⁻⁴ présentent les significations indiquées selon la revendication 1,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO- ou-OCF₂-, dans les formules V et VI également une liaison simple, dans les formules V et VIII également -CF₂O-, et
r représente 0 ou 1, et
s représente 0 ou 1.

5. Milieu cristallin liquide selon une ou plusieurs des revendications 1 à 4, **caractérisé en ce qu'**il comprend additionnellement un ou plusieurs composés choisis parmi les formules qui suivent : 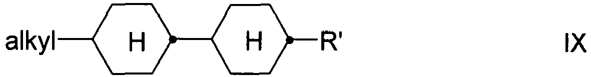 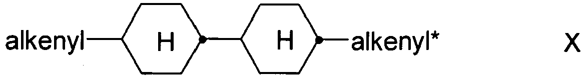 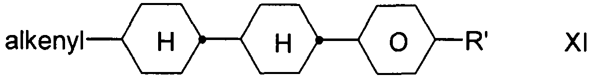 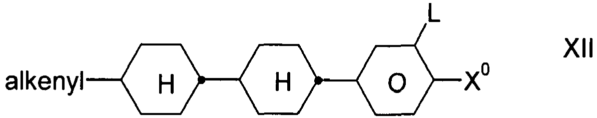 dans lesquelles X⁰ présente la signification indiquée selon la revendication 1,
L représente H ou F,
"alkyl" représente C₁₋₇-alkyle,
R' représente C₁₋₇-alkyle, C₁₋₆-alcoxy ou C₂₋₇-alkényle, et
"alkenyl" et "alkenyl*" représentent, chacun indépendamment de l'autre, C₂₋₇-alkényle.

6. Milieu cristallin liquide selon une ou plusieurs des revendications 1 à 5, **caractérisé en ce que**, dans les formules ci-avant, X⁰ représente F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ ou CH=CF₂.

7. Milieu cristallin liquide selon une ou plusieurs des revendications 1 à 6, **caractérisé en ce que** le composé de la formule XIII est choisi parmi les formules qui suivent : 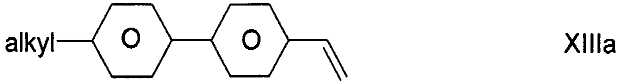 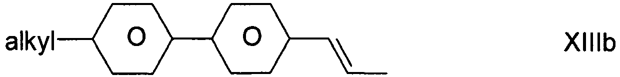 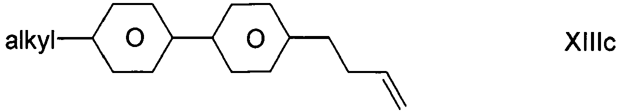 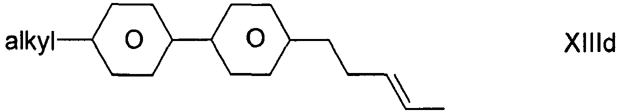 dans lesquelles "alkyl" représente C₁₋₇-alkyle.

8. Milieu cristallin liquide selon une ou plusieurs des revendications 1 à 7, **caractérisé en ce qu'**il comprend additionnellement un ou plusieurs composés de la formule qui suit : 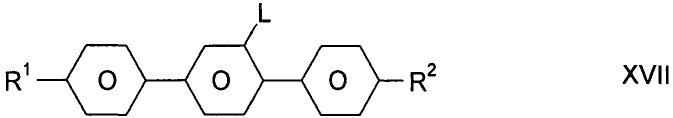 dans laquelle R¹ et R² représentent, chacun indépendamment de l'autre, n-alkyle, alcoxy, oxaalkyle, fluoroalkyle ou alkényle dont chacun comporte jusqu'à 9 atomes de C, et L représente H ou F.

9. Milieu cristallin liquide selon une ou plusieurs des revendications 1 à 8, **caractérisé en ce qu'**il comprend
| |
|---|
| 2-30% en poids de composés de la formule I, |
| 10-60% en poids de composés des formules II et/ou III, |
| 20-70% en poids de composés des formules IX-XIII, |
| 4-30% en poids de composés de la formule XVII. |

10. Milieu cristallin liquide selon une ou plusieurs des revendications 1 à 9, **caractérisé en ce qu'**il peut comprendre 0-10% en poids de stabiliseurs.

11. Milieu cristallin liquide selon une ou plusieurs des revendications 1 à 10, **caractérisé en ce qu'**il peut comprendre des dopants.

12. Procédé pour la préparation d'un milieu cristallin liquide selon une ou plusieurs des revendications 1 à 11, **caractérisé en ce qu'**un ou plusieurs composés des formules I, XIII et III comme défini selon la revendication 1 est/sont mélangés avec un ou plusieurs composés selon une ou plusieurs des revendications 2 à 8 ou avec d'autres composés cristallins liquides et/ou additifs.

13. Utilisation d'un milieu cristallin liquide selon une ou plusieurs des revendications 1 à 11 à des fins électro-optiques.

14. Utilisation d'un milieu cristallin liquide selon la revendication 13 dans des affichages TN, TFT, IPS ou OCB.

15. Affichage à cristal liquide électro-optique contenant un milieu cristallin liquide selon une ou plusieurs des revendications 1 à 11.
